(19) Europäisches Patentamt
European Patent Office
Office européen des brevets

(11) **EP 3 116 081 B1**

(12) **EUROPEAN PATENT SPECIFICATION**

(45) Date of publication and mention
of the grant of the patent:
**21.03.2018 Bulletin 2018/12**

(51) Int Cl.:
*H02J 3/12* (2006.01)     *G05F 1/66* (2006.01)
*H02J 3/32* (2006.01)     *H02J 3/38* (2006.01)
*H02J 7/35* (2006.01)     *H02J 3/00* (2006.01)
*H02J 3/14* (2006.01)

(21) Application number: **16177733.9**

(22) Date of filing: **04.07.2016**

(54) **RECEIVED ELECTRICAL POWER CONTROL METHOD, RECEIVED ELECTRICAL POWER CONTROL DEVICE, AND ELECTRICAL INSTRUMENT**

VERFAHREN ZUR STEUERUNG DER EMPFANGENEN ELEKTRISCHEN ENERGIE, VORRICHTUNG ZUR STEUERUNG DER EMPFANGENEN ELEKTRISCHEN ENERGIE, ELEKTRISCHES GERÄT

PROCÉDÉ DE COMMANDE DE L'ÉNERGIE ÉLECTRIQUE REÇUE, DISPOSITIF DE COMMANDE DE L'ÉNERGIE ÉLECTRIQUE REÇUE ET APPAREIL ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.07.2015 JP 2015136423**

(43) Date of publication of application:
**11.01.2017 Bulletin 2017/02**

(73) Proprietor: **Panasonic Intellectual Property Management Co., Ltd.**
**Osaka-shi, Osaka 540-6207 (JP)**

(72) Inventor: **WATANABE, Kenichi**
**Osaka 540-6207 (JP)**

(74) Representative: **Eisenführ Speiser**
**Patentanwälte Rechtsanwälte PartGmbB**
**Postfach 10 60 78**
**28060 Bremen (DE)**

(56) References cited:
**EP-A1- 2 874 263      WO-A1-2015/029448**
**WO-A1-2015/041367      JP-A- 2015 035 883**
**US-A1- 2010 204 845      US-A1- 2012 083 927**
**US-A1- 2015 160 040**

**Description**

BACKGROUND

1. Technical Field

The present disclosure relates to an received electrical power control method of controlling the electrical power amount handled by an electrical instrument so as to bring the total received electrical power amount closer to a predetermined received electrical power target amount.

Japanese Unexamined Patent Application Publication No. 2012-249374 discloses a technology in which a microgrid calculator calculates an electrical power allotment instruction value and an electricity storage facility performs charging/discharging based on this electrical power allotment instruction value so as to achieve electrical power smoothing at an interconnecting point between a microgrid and an electrical power system.

In order to accurately predict an amount of consumption power it is proposed in JP 20115/035883 A that an individual consumption power measurement unit measures power individually consumed by a plurality of electrical apparatuses. A consumed power amount acquisition unit acquires an amount of power consumed by the plurality of electrical apparatuses from a start time to the current time. A representative value information acquisition unit acquires representative value information showing a representative value of power individually consumed by the plurality of electrical apparatuses for respective driving states. A consumption schedule power amount acquisition unit acquires an amount of power which is scheduled to be consumed by the plurality of electrical apparatuses from the current time to an end time on the basis of the representative value information and information showing a schedule. A consumption power amount prediction value acquisition unit acquires a prediction value by counting up the amount of power acquired by the consumed power amount acquisition unit and the amount of power acquired by the consumption schedule power amount acquisition unit.

In order to accurately predict an amount of consumption power it is proposed in EP 2 874 263 A1 that an individual consumption power measurement unit measures power individually consumed by a plurality of electrical apparatuses. A consumed power amount acquisition unit acquires an amount of power consumed by the plurality of electrical apparatuses from a start time to the current time. A representative value information acquisition unit acquires representative value information showing a representative value of power individually consumed by the plurality of electrical apparatuses for respective driving states. A consumption schedule power amount acquisition unit acquires an amount of power which is scheduled to be consumed by the plurality of electrical apparatuses from the current time to an end time on the basis of the representative value information and information showing a schedule. A consumption power amount prediction value acquisition unit acquires a prediction value by counting up the amount of power acquired by the consumed power amount acquisition unit and the amount of power acquired by the consumption schedule power amount acquisition unit.

WO 2015/029448 A1 describes the purpose of the present invention is to accurately estimate future power demand from the past power consumption amount. An energy management device according to the present invention comprises: a communication unit for obtaining the information of a power consumption amount; and a control unit for, based on the information of the power consumption amount, calculating the target range of estimated future power demand to be informed to a power producer and supplier. The control unit calculates the target range at predetermined time intervals on the basis of the statistical value of the power consumption amounts of predetermined days.

US 2010/0204845 A1 describes a demand control system including a CPU and a power database. The power database stores actual data in a state where the actual data are classified according to environmental conditions, the actual data being based on a consumption integration value of power actually consumed by the power consuming device. The CPU calculates a predicted integration value of power predicted to be consumed in the demand time period, by using contents stored in the power database at a start or before the start of the current demand time period. Further, the CPU lowers a power target value when the calculated predicted integration value falls below the power target value being a target value of the power to be consumed in the demand time period.

In one embodiment WO 2015/041367 A1, a power demand and supply control apparatus includes a target value acquiring unit, an information collecting unit, an adjustment amount determining unit, and a communication unit. The acquiring unit acquires a target value of a total adjustment amount. The collecting unit collects information of registered power amount of each of the requesting targets. The determining unit determines an adjustment amount for each of the requesting targets based on the registered power amount of each of the requesting targets and the target value of the total adjustment amount. The communication unit notifies each of the requesting targets of the adjustment amount determined. The information of the registered power amount includes information of an executable time and date. The determining unit extracts a requesting target that has the executable time and date included in the power adjust ment execution time and date, and determines the adjustment amount.

US 2015/0160040 A1 describes a power monitoring unit estimating the integral power consumption on the basis of an obtained actual value or amount of change of power consumption. When the estimated value for the integral power consumption as estimated by the power monitoring unit reaches a prescribed amount of power, a presentation unit presents a warning, on the basis of the power values obtained by a load power meter, indicating a list of loads for which the power consumption should be controlled.

## SUMMARY

However, the technology disclosed in Japanese Unexamined Patent Application Publication No. 2012-249374 cannot appropriately perform the electrical power smoothing unless the microgrid calculator calculates and transmits the electrical power allotment instruction value in a transmission cycle equal to the control cycle of charging/discharging of each electricity storage facility.

One non-limiting and exemplary embodiment provides an received electrical power control method and the like that are capable of bringing the total received electrical power amount closer to a predetermined received electrical power target amount even when an received electrical power control device has an instruction cycle longer than the adjustment cycle of an electrical instrument such as a battery.

It should be noted that general or specific embodiments may be implemented as a system, a method, an integrated circuit, a computer program, a storage medium, or any selective combination thereof.

In one general aspect, the techniques disclosed here feature, a received electrical power control method according to independent claim 1.

These comprehensive or specific aspects may be achieved by a system, a device, an integrated circuit, a computer program, or a computer-readable non-transitory recording medium such as a CD-ROM, or may be achieved by an optional combination of the system, the device, the method, the integrated circuit, the computer program, and the recording medium.

The received electrical power control method and the like according to one aspect of the present disclosure can bring the total received electrical power amount closer to the predetermined received electrical power target amount even when an instruction cycle is longer than the adjustment cycle of an electrical instrument such as a battery.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

## BRIEF DESCRIPTION OF THE DRAWINGS

FIG. 1 is a block diagram of the configuration of a received electrical power control system according to an embodiment of the present disclosure;
FIG. 2 is a block diagram of the configuration of a received electrical power control device according to the embodiment;
FIG. 3 is a block diagram of the configuration of an electrical instrument according to the embodiment;
FIG. 4 is a flowchart of a process of the received electrical power control device according to the embodiment;
FIG. 5 is a flowchart of a process of the electrical instrument according to the embodiment;
FIG. 6 is a conceptual diagram of an instruction cycle and an adjustment cycle according to a reference example different from the embodiment;
FIG. 7 is a conceptual diagram of an instruction cycle and an adjustment cycle according to an example of the embodiment; and
FIG. 8 is a conceptual diagram of an instruction cycle and an adjustment cycle according to another example of the embodiment.

## DETAILED DESCRIPTION

(Underlying Knowledge Forming Basis of the Present Disclosure)

The inventors have found that it is difficult to bring the total received electrical power amount closer to the predetermined received electrical power target amount by the conventional technology according to Japanese Unexamined Patent Application Publication No. 2012-249374 described in BACKGROUND.

Specifically, in the disclosure of Japanese Unexamined Patent Application Publication No. 2012-249374, the microgrid calculator calculates the electrical power allotment instruction value, and the electricity storage facility performs charging/discharging based on this electrical power allotment instruction value. The disclosure says that it achieves electrical power smoothing at an interconnecting point between the microgrid and the electrical power system.

However, the electricity storage facility adjusts the charging/discharging such that the total amount becomes equal to the instruction value acquired from the microgrid calculator. Thus, the electrical power smoothing cannot be performed appropriately unless the microgrid calculator calculates and transmits the electrical power allotment instruction value in a transmission cycle equal to the control cycle of charging/discharging of each electricity storage facility. For example, when electricity storage facilities cannot receive the electrical power allotment instruction value from the microgrid calculator due to, for example, congestion of a communication network, these electricity storage facilities cannot appropriately perform charging/discharging. This makes it difficult to achieve the electrical power smoothing at the interconnecting point between the microgrid and the electrical power system.

Therefore, a received electrical power control method according to an aspect of the present disclosure is a received electrical power control method of controlling an electrical power amount handled by at least one electrical instrument associated and connected with each of one or more power receiving points that receive electrical power from an electrical power system, so as to bring a total received electrical power amount closer to a predetermined received electrical power target amount, the total received electrical power amount being an electrical power amount received at each of the power receiving points from the electrical power system in a predetermined period, the method including a received electrical power amount acquiring step of acquiring an actual received electrical power amount that is an actual value of the electrical power amount received at each power receiving point from the electrical power system in an elapsed period of the predetermined period, and a predicted received electrical power amount that is a predicted value of the electrical power amount to be received at the power receiving point from the electrical power system in a remaining period of the predetermined period; a control amount calculating step of calculating a control amount that is an electrical power amount obtained by distributing a difference between the predetermined received electrical power target amount and the total received electrical power amount calculated from the actual received electrical power amount and the predicted received electrical power amount, to the at least one electrical instrument connected with each power receiving point; a target value calculating step of calculating, for each power receiving point, a difference between the predicted received electrical power amount for the power receiving point and the control amount for the at least one electrical instrument connected with the power receiving point, as a target value of the electrical power amount received at the power receiving point from the electrical power system; and an instruction value determining step of determining the target value calculated at the target value calculating step for each power receiving point, as an instruction value for the at least one electrical instrument connected with the power receiving point.

Accordingly, the target value of the amount of received electrical power is calculated from the control amount in accordance with the difference between the total received electrical power amount and the predetermined received electrical power target amount, and is determined as the instruction value. Thus, the target value consistent with the control amount for bringing the total received electrical power amount closer to the predetermined received electrical power target amount is determined as the instruction value. Consequently, the instruction value for bringing the total received electrical power amount closer to the predetermined received electrical power target amount is appropriately determined.

Determining, in place of the control amount, the target value of the amount of received electrical power as the instruction value allows for a longer instruction cycle. In other words, even when the instruction cycle is longer than the adjustment cycle of the electrical instrument such as a battery, it is possible to bring the total received electrical power amount closer to the predetermined received electrical power target amount.

For example, in the instruction value determining step, one of the control amount and the target value may be selected as the instruction value, the control amount may be determined as the instruction value when the control amount is selected as the instruction value, and the target value may be determined as the instruction value when the target value is selected as the instruction value.

Accordingly, the instruction value for the electrical instrument is selected from the target value and the control amount. Thus, the instruction value for the electrical instrument can be adaptively switched between the target value and the control amount.

Moreover, for example, in the instruction value determining step, the control amount may be selected as the instruction value for a first period including a start time of the predetermined period; and the target value may be selected as the instruction value for a second period including an end time of the predetermined period.

Accordingly, in a period in which the predicted amount of received electrical power is assumed to have a low prediction accuracy because only a short time has passed since the start time, the control amount is used as the instruction value. On the other hand, the target value is used as the instruction value in a period in which the predicted amount of received electrical power is assumed to have a high prediction accuracy because a long time has passed since the start time. This use of the target value as the instruction value in the period in which the predicted amount of received electrical power is assumed to have a high prediction accuracy allows for a longer instruction cycle while maintaining the control accuracy.

Moreover, for example, in the instruction value determining step; the control amount may be selected as the instruction value for the at least one electrical instrument connected with, among the one or more power receiving points, a power receiving point at which the actual received electrical power amount or the predicted received electrical power amount has a variation larger than a predetermined threshold, and the target value may be selected as the instruction value for the at least one electrical instrument connected with, among the one or more power receiving points, a power receiving point at which the actual received electrical power amount or the predicted received electrical power amount has a variation equal to or smaller than the predetermined threshold.

Accordingly, the control amount is used as the instruction value when the predicted amount of received electrical power is assumed to have a low prediction accuracy because the actual amount of received electrical power or the predicted amount of received electrical power has a large variation. On the other hand, the target value is used as the instruction value when the predicted amount of received electrical power is assumed to have a high prediction accuracy because the actual amount of received electrical power or the predicted amount of received electrical power only has a small variation. This use of the target value as the instruction value when the predicted amount of received electrical power is assumed to have a high prediction accuracy allows for a longer instruction cycle while maintaining the control accuracy.

Moreover, for example, in the instruction value determining step, in a case in which a solar power generating device is associated and connected with one power receiving point among the one or more power receiving points, (i) the control amount may be selected as the instruction value for the at least one electrical instrument connected with the one power receiving point when an output electrical power amount of the solar power generating device has a variation larger than a predetermined threshold, and (ii) the target value may be selected as the instruction value for the at least one electrical instrument connected with the one power receiving point when the output electrical power amount of the solar power generating device has a variation equal to or smaller than the predetermined threshold.

Accordingly, the control amount is used as the instruction value when the predicted amount of received electrical power is assumed to have a low prediction accuracy because the amount of output electrical power of the solar power generating device has a large variation. On the other hand, the target value is used as the instruction value when the predicted amount of received electrical power is assumed to have a high prediction accuracy because the amount of output electrical power of the solar power generating device only has a small variation. This use of the target value as the instruction value when the predicted amount of received electrical power is assumed to have a high prediction accuracy allows for a longer instruction cycle while maintaining the control accuracy.

Moreover, for example, the received electrical power control method may further include a notifying step of notifying the at least one electrical instrument of the instruction value determined at the instruction value determining step.

This allows the electrical instrument to receive the notification of the instruction value thus given and control the electrical power amount in accordance with the instruction value thus received.

Moreover, for example, the at least one electrical instrument may include at least one of a battery, a load, and a generator.

This allows the battery, the load, or the generator as the electrical instrument to control the electrical power amount.

Moreover, for example, the received electrical power control method may further include a characteristic acquiring step of acquiring a characteristic of the at least one electrical instrument, wherein the characteristic may represent at least one of a remaining capacity of the battery, a rated capacity of the battery, a degradation state of the battery, a rated output capacity of the battery, a rated input capacity of the battery, a consumed electrical power amount of the load, a controllable consumed electrical power amount of the load, an output electrical power amount of the generator, and a rated output capacity of the generator; and in the control amount calculating step, the difference between the total received electrical power amount and the predetermined received electrical power target amount may be distributed in accordance with the characteristic.

Accordingly, the difference between the total received electrical power amount and the predetermined received electrical power target amount is appropriately allocated in accordance with the characteristic of the electrical instrument such as the remaining capacity of the battery.

Moreover, an electrical power control device according to an aspect of the present disclosure may be a received electrical power control device that controls an electrical power amount handled by at least one electrical instrument associated and connected with each of one or more power receiving points that receive electrical power from an electrical power system, so as to bring a total received electrical power amount closer to a predetermined received electrical power target amount, the total received electrical power amount being an electrical power amount received at each of the power receiving points from the electrical power system in a predetermined period, the device including: a received electrical power amount acquirer that acquires an actual received electrical power amount that is an actual value of the electrical power amount received at each power receiving point from the electrical power system in an elapsed period of the predetermined period, and a predicted received electrical power amount that is a predicted value of the electrical power amount to be received at the power receiving point from the electrical power system in a remaining period of the predetermined period; a control amount calculator that calculates a control amount that is the electrical power amount obtained by distributing a difference between the predetermined received electrical power target amount and the total received electrical power amount calculated from the actual received electrical power amount and the predicted received electrical power amount, to the at least one electrical instrument connected with each power receiving point; a target value calculator that calculates, for each power receiving point, a difference between the predicted received electrical power amount for the power receiving point and the control amount for the at least one electrical instrument connected with the power receiving point, as a target value of the electrical power amount received at the power receiving point from the electrical power system; and an instruction value determiner that determines the target value calculated by the target value calculator for each power receiving point, as an instruction value for the at least one electrical instrument connected with the power receiving point.

Accordingly, the received electrical power control device can calculate the target value of the amount of received electrical power from the control amount in accordance with the difference between the total received electrical power amount and the predetermined received electrical power target amount, and determine this target value as the instruction value. Thus, the received electrical power control device can determine, as the instruction value, the target value consistent with the control amount for bringing the total received electrical power amount closer to the predetermined received electrical power target amount, and appropriately determine the instruction value for bringing the total received electrical power amount closer to the predetermined received electrical power target amount.

Furthermore, the received electrical power control device can achieve a longer instruction cycle by determining, in place of the control amount, the target value of the amount of received electrical power as the instruction value. In other words, it is possible to bring the total received electrical power amount closer to the predetermined received electrical power target amount even when the instruction cycle is longer than the adjustment cycle of the electrical instrument such as the battery.

For example, the instruction value determiner may select one of the control amount and the target value as the instruction value, determine the control amount as the instruction value when the control amount is selected as the instruction value, and determine the target value as the instruction value when the target value is selected as the instruction value.

Accordingly, the received electrical power control device can select the instruction value for the electrical instrument from the target value and the control amount. Thus, the received electrical power control device can adaptively switch between the target value and the control amount as the instruction value for the electrical instrument.

Moreover, an electrical instrument according to an aspect of the present disclosure may be an electrical instrument that acquires the instruction value determined by the received electrical power control device, and charges and discharges electrical power, and is included in the at least one electrical instrument, the electrical instrument including: an instruction value acquirer that acquires the instruction value; and a controller that controls a charging or discharging electrical power amount of the electrical instrument in accordance with the instruction value acquired by the instruction value acquirer, wherein the controller controls the charging or discharging electrical power amount of the electrical instrument so as to bring the charging or discharging electrical power amount of the electrical instrument closer to the control amount, when the control amount is acquired as the instruction value; and controls the charging or discharging electrical power amount of the electrical instrument so as to bring an received electrical power amount closer to the target value, when the target value is acquired as the instruction value, the received electrical power amount being the electrical power amount received from the electrical power system at a power receiving point with which the electrical instrument is associated and connected among the one or more power receiving points.

Accordingly, the electrical instrument such as the battery that charges and discharges electrical power can acquire the control amount or the target value as the instruction value and control the electrical power amount in accordance with the control amount or the target value acquired as the instruction value.

Moreover, an electrical instrument according to an aspect of the present disclosure may be an electrical instrument that acquires the instruction value determined by the received electrical power control device, and generates and outputs electrical power, and is included in the at least one electrical instrument, the electrical instrument including: an instruction value acquirer that acquires the instruction value; and a controller that controls an output electrical power amount of the electrical instrument in accordance with the instruction value acquired by the instruction value acquirer, wherein the controller controls the output electrical power amount of the electrical instrument so as to bring the output electrical power amount of the electrical instrument closer to the control amount, when the control amount is acquired as the instruction value, and controls the output electrical power amount of the electrical instrument so as to bring an received electrical power amount closer to the target value, when the target value is acquired as the instruction value, the received electrical power amount being the electrical power amount received from the electrical power system at a power receiving point with which the electrical instrument is associated and connected among the one or more power receiving points.

Accordingly, the electrical instrument such as the generator that generates and outputs electrical power can acquire the control amount or the target value as the instruction value and control the electrical power amount in accordance with the control amount or the target value acquired as the instruction value.

In addition, these comprehensive or specific aspects may be achieved by a system, a device, a method, an integrated circuit, a computer program, or a computer-readable non-transitory recording medium such as a CD-ROM, or may be achieved by an optional combination of the system, the device, the method, the integrated circuit, the computer program, or the recording medium.

Exemplary embodiments of the present disclosure will be described below with reference to the drawings. The embodiments below each describe a comprehensive or specific example. For example, numerical values, shapes, materials, components, the arrangement positions and connection states of these components, steps, and the order of these steps described in the embodiment are exemplary and are not intended to limit the scope of the present disclosure. Among components according to the embodiment, any component not described in the independent claim of the highest concept is described as an optional element.

Typically, the electrical power amount means an accumulated value of electrical power in a certain time, and corresponds to energy. In this specification, the amount of electrical power is referred as the electrical power amount in some cases. The electrical power (power) and the electrical power (energy) correspond to each other. Thus, in this specification, the electrical power may be used to mean the electrical power amount (energy), and the electrical power amount may be used to mean the electrical power (power). In addition, the electrical power and the electrical power amount may mean their values.

Charging/discharging corresponds to at least one of charging and discharging. Input/output corresponds to at least one of input and output. A rating for input/output means a limit previously defined for input/output. In some cases, input means charging, and output means discharging.

(Embodiment)

The present embodiment of the present disclosure describes a received electrical power control device that controls the electrical power amount input/output by an electrical instrument so as to bring a total received electrical power amount closer to a predetermined received electrical power target amount.

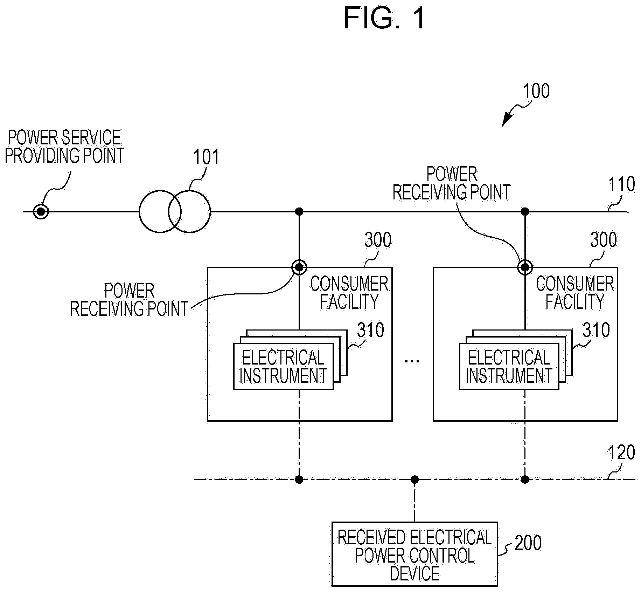

Fig. 1 is a block diagram of the configuration of a received electrical power control system including a received electrical power control device according to the present embodiment. As illustrated in Fig. 1, this received electrical power control system 100 according to the present embodiment includes a power distribution transformer 101, a power distribution line 110, one or more consumer facilities 300, a communication line 120, and a received electrical power control device 200.

The power distribution transformer 101 transforms electrical power supplied from an electrical power system into an appropriate voltage before supplying the electrical power to each consumer facility 300 or each electrical instrument 310. The power distribution transformer 101 is, for example, a transformer in a power distribution substation, a pole-mounted transformer, or a cubicle at an apartment building. The power distribution transformer 101 is not an essential component of the received electrical power control system 100.

The power distribution line 110 is a power line for electrically connecting the power distribution transformer 101 and the consumer facility 300 and supplying electrical power from the power distribution transformer 101 to the consumer facility 300. The power distribution line 110 includes a power service providing poi nt.

The power service providing point is a point capable of bundling received electrical power amounts from one or more power receiving points. The present embodiment provides an electrical power service that brings the total received electrical power amount at the power service providing point closer to a predetermined received electrical power target amount. In Fig. 1, all power receiving points belong to one power service providing point.

The power service providing point in Fig. 1 is exemplary and may be set to any point. For example, the power service providing point is the power receiving point of the consumer facility 300 for a consumer that receives a bundle of high-voltage power, and the electrical power service is provided to the power receiving point of the consumer facility 300. Moreover, the power service providing point does not need to be a physical point. For example, the power service providing point may be a virtual (logical) point summing a measured value of a smart meter (not illustrated) installed at the power receiving point of the consumer facility 300.

The consumer facility 300 is a facility installed at premises of a consumer. The consumer facility 300 includes the electrical instrument 310. The consumer facility 300 may include a plurality of the electrical instruments 310. The consumer facility 300 includes the power receiving point that receives electrical power from the electrical power system through the power distribution transformer 101 and the power distribution line 110. The consumer may be a high voltage consumer or a low voltage consumer, for example. The consumer facility 300 is not limited to any particular communication protocol.

The power receiving point is an interconnecting point at which the electrical instrument 310 interconnects with the electrical power system.

The electrical instrument 310 is a battery, a controllable load (load device), or a generator. In other words, the consumer facility 300 includes the battery, the controllable load, or the generator as the electrical instrument 310.

The battery charges electrical power supplied from the electrical power system. The battery discharges to supply electrical power to another electrical instrument 310 or another electrical power system in the consumer facility 300 including the battery. The battery includes a rechargeable battery and an inverter. The inverter performs an alternate current (AC)/direct current (DC) conversion when the rechargeable battery is charged. The inverter performs a DC/AC conversion when the rechargeable battery is discharged.

The controllable load is capable of changing a consumed electrical power amount in accordance with an instruction value by performing, for example, a stop, a setting change, or a mode change. The load is an instrument owned by the consumer and consumes electrical power. The load is, for example, a household electrical appliance. The controllable load may include a communication unit that receives the instruction value, and a controller that changes the consumed electrical power amount. The controllable load is a heat pump water heater, for example.

The consumer facility 300 may include an uncontrollable load. The uncontrollable load may be connected with the power receiving point. The uncontrollable load is a load unable to change the consumed electrical power amount in accordance with an instruction value. For example, the uncontrollable load does not include a communication unit that receives the instruction value, nor a controller that changes the consumed electrical power amount. The uncontrollable load is a dryer, for example.

The generator is capable of changing a generated and output electrical power amount in accordance with an instruction value. For example, the generator includes a communication unit that receives the instruction value, and a controller that changes the generated and output electrical power amount. The generator is an engine generator, for example.

The consumer facility 300 may include a power generating device of which a generated and output electrical power amount is derived from natural energy. Such a power generating device may be connected with the power receiving point. Such a power generating device is a solar power generating device, for example.

The communication line 120 connects the electrical instrument 310 (or the consumer facility 300) and the received electrical power control device 200 so that they can communicate with each other. The communication line 120 is achieved by, for example, a wired LAN conforming to, for example, the IEEE802.3 standard, a wireless LAN conforming to, for example, the IEEE802.11a, b, or g standard, or a public communication network such as a mobile phone network.

The received electrical power control device 200 acquires a characteristic of the electrical instrument 310 and the received electrical power amount at the power receiving point for each of the one or more consumer facilities 300. Then, the received electrical power control device 200 calculates a control amount of the electrical instrument 310 and a target value of the received electrical power amount at the power receiving point based on the characteristic of the electrical instrument 310 and the received electrical power amount at the power receiving point. Then, the received electrical power control device 200 transmits one of the control amount and the target value as an instruction value to the electrical instrument 310.

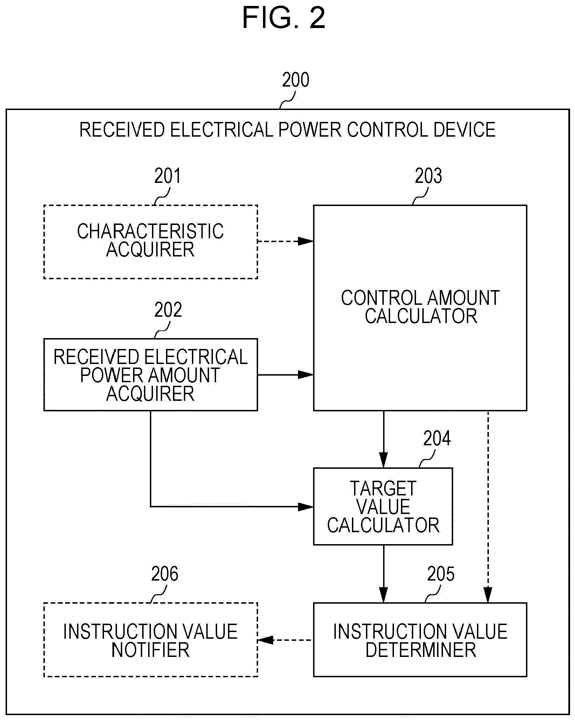

Fig. 2 is a block diagram of the configuration of the received electrical power control device 200 illustrated in Fig. 1. As illustrated in Fig. 2, the received electrical power control device 200 includes a characteristic acquirer 201, a received electrical power amount acquirer 202, a control amount calculator 203, a target value calculator 204, an instruction value determiner 205, and an instruction value notifier 206.

The characteristic acquirer 201 acquires the characteristic of the electrical instrument 310 and transmits it to the control amount calculator 203. When the electrical instrument 310 is the battery, the characteristic of the electrical instrument 310 includes, for example, a remaining capacity, a rated capacity, a degradation state, a rated output capacity, and a rated input capacity. The rated output capacity and the rated input capacity may be based on the rating of the inverter in the battery, or may be set to be a discharging rate × the rated capacity or a charging rate × the rated capacity.

When the electrical instrument 310 is the load, the characteristic of the electrical instrument 310 may be, for example, the consumed electrical power amount or controllable consumed electrical power amount. When the electrical instrument 310 is the generator, the characteristic of the electrical instrument 310 includes, for example, an output electrical power amount and a rated output capacity.

The received electrical power amount acquirer 202 acquires an actual received electrical power amount and a predicted received electrical power amount at each power receiving point, and transmits them to the control amount calculator 203.

The actual received electrical power amount is the actual value of the electrical power amount received from the electrical power system in an elapsed period of an electrical power service providing period (predetermined period). Specifically, the elapsed period is a period from the start time of the electrical power service providing period to the current time. The predicted received electrical power amount is the predicted value of the electrical power amount to be received from the electrical power system in the remaining period of the electrical power service providing period. Specifically, the remaining period is a period from the current time to the end time of the electrical power service providing period. The received electrical power amount at the power receiving point corresponds to the power flow amount or reverse power flow of electrical power at the power receiving point.

For example, the received electrical power amount acquirer 202 acquires, from the consumer facility 300, the actual received electrical power amount at the power receiving point of the consumer facility 300. Specifically, the received electrical power amount acquirer 202 may acquire the received electrical power amount from a smart meter or an electrical power sensor included in the consumer facility 300. The received electrical power amount acquirer 202 may acquire the received electrical power amount through the electrical instrument 310 in the consumer facility 300.

For example, the received electrical power amount acquirer 202 acquires the predicted received electrical power amount in the remaining period by predicting the received electrical power amount in the remaining period based on the actual received electrical power amount in the elapsed period. More specifically, the received electrical power amount acquirer 202 acquires the predicted received electrical power amount in the remaining period by prediction based on an assumption that the electrical power amount would not be controlled in the remaining period. In other words, the received electrical power amount acquirer 202 acquires the predicted received electrical power amount by predicting the consumed electrical power amount in the remaining period.

The control amount calculator 203 calculates the control amount for each electrical instrument 310. Specifically, the control amount calculator 203 acquires the actual received electrical power amount and the predicted received electrical power amount at the power receiving point, and calculates the total received electrical power amount at the power service providing point from the electrical power system in the electrical power service providing period. Then, the control amount calculator 203 calculates the control amount for each electrical instrument 310 so as to bring the total received electrical power amount closer to the predetermined received electrical power target amount, and transmits this control amount to the target value calculator 204.

When the electrical instrument 310 is the battery, the control amount corresponds to a charge amount (electrical power amount to be charged) or a discharge amount (electrical power amount to be discharged). When the electrical instrument 310 is the load, the control amount corresponds to a change amount of the consumed electrical power amount. When the electrical instrument 310 is the generator, the control amount corresponds to an output amount (output electrical power amount). The method of the calculation will be described in detail later.

The target value calculator 204 calculates, for each power receiving point, the target value of the received electrical power amount from the predicted received electrical power amount acquired by the received electrical power amount acquirer 202 and the control amount calculated by the control amount calculator 203. The method of the calculation will be described in detail later.

The instruction value determiner 205 receives the target value from the target value calculator 204, and determines the target value as the instruction value. The instruction value determiner 205 may receive the control amount from the control amount calculator 203 and the target value from the target value calculator 204, select one of the control amount and the target value, and determine the selected one as the instruction value. The method of the determination will be described in detail later.

The instruction value notifier 206 transmits the instruction value determined by the instruction value determiner 205 to the electrical instrument 310.

In Fig. 2, the characteristic acquirer 201 is a component of the received electrical power control device 200, but is not an essential component thereof. For example, when the characteristic is not used in the calculation of the control amount, the characteristic acquirer 201 is not needed.

In Fig. 2, the instruction value notifier 206 is a component of the received electrical power control device 200, but is not an essential component thereof. For example, the instruction value notifier 206 may be mounted on a separate device. Then, this separate device may transmit the instruction value determined by the received electrical power control device 200 to the electrical instrument 310. Alternatively, the electrical instrument 310 may acquires the instruction value by referring to the instruction value determined by the instruction value determiner 205 of the received electrical power control device 200.

Any other component may be mounted on a separate device. In this case, the received electrical power control device 200 does not have to include the component mounted on the separate device. The received electrical power control device 200 may include a storage for storing the characteristic, the received electrical power amount, the control amount, the target value, and the instruction value. The received electrical power control device 200 may include a communication unit to communicate with the electrical instrument 310 and other devices in the consumer facility 300.

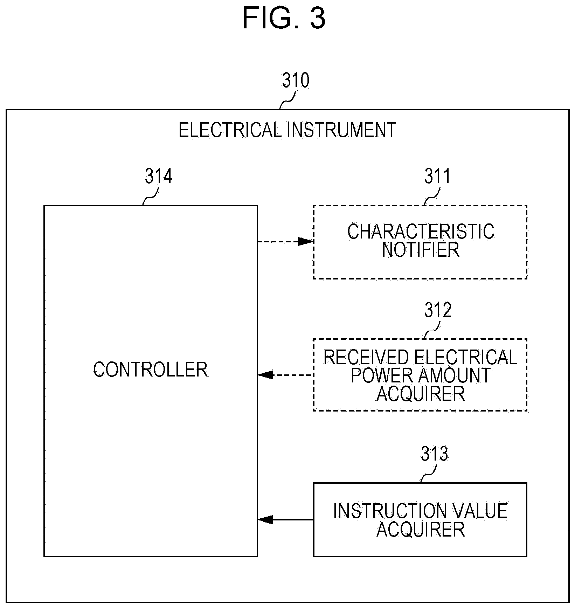

Fig. 3 is a block diagram of the configuration of the electrical instrument 310 illustrated in Fig. 1. As illustrated in Fig. 3, the electrical instrument 310 includes a characteristic notifier 311, a received electrical power amount acquirer 312, an instruction value acquirer 313, and a controller 314.

The characteristic notifier 311 notifies the received electrical power control device 200 of the characteristic of the electrical instrument 310. For example, the characteristic notifier 311 notifies the received electrical power control device 200 of the characteristic of the electrical instrument 310 by transmitting the characteristic of the electrical instrument 310 to the received electrical power control device 200 through the communication line 120. The characteristic of the electrical instrument 310 may be a characteristic of the controller 314 in the electrical instrument 310.

The received electrical power amount acquirer 312 acquires the received electrical power amount at the power receiving point and transmits this received electrical power amount to the controller 314. The received electrical power amount acquirer 312 may acquire the received electrical power amount from the smart meter or the electrical power sensor included in the consumer facility 300. The received electrical power amount acquirer 312 may notify the received electrical power control device 200 of the received electrical power amount at the power receiving point. For example, the received electrical power amount acquirer 312 notifies the received electrical power control device 200 of the received electrical power amount at the power receiving point by transmitting this received electrical power amount at the power receiving point to the received electrical power control device 200 through the communication line 120.

The instruction value acquirer 313 acquires the instruction value determined by the received electrical power control device 200. For example, the instruction value acquirer 313 acquires the instruction value by receiving the instruction value from the received electrical power control device 200 through the communication line 120.

The controller 314 controls the electrical power amount handled by the electrical instrument 310. When the target value is acquired as the instruction value, the controller 314 controls the electrical power amount handled by the electrical instrument 310 so as to bring the received electrical power amount at the power receiving point closer to this target value.

For example, when the received electrical power amount is or assumed to be larger than the target value, the controller 314 reduces an input electrical power amount of the electrical instrument 310 or increases an output electrical power amount of the electrical instrument 310. When the received electrical power amount is or assumed to be smaller than the target value, the controller 314 increases the input electrical power amount of the electrical instrument 310 or reduces the output electrical power amount of the electrical instrument 310.

When the control amount is acquired as the instruction value, the controller 314 controls a handled electrical power amount of the electrical instrument 310 so as to bring the handled electrical power amount of the electrical instrument 310 closer to this control amount. For example, the controller 314 causes the handled electrical power amount of the electrical instrument 310 to be equal to the control amount. The handled electrical power amount of the electrical instrument 310 is the electrical power amount handled by the electrical instrument 310 and corresponds to an input/output electrical power amount of the electrical instrument 310.

When the electrical instrument 310 is the battery, which charges and discharges electrical power, the controller 314 controls a charging or discharging electrical power amount of the electrical instrument 310 in accordance with the instruction value acquired by the instruction value acquirer 313. When the control amount is acquired as the instruction value, the controller 314 controls the charging or discharging electrical power amount so as to bring the charging or discharging electrical power amount closer to this control amount. When the target value is acquired as the instruction value, the controller 314 controls the charging or discharging electrical power amount so as to bring the received electrical power amount at the power receiving point closer to this target value.

When the electrical instrument 310 is the generator, which generates and outputs electrical power, the controller 314 controls the output electrical power amount of the electrical instrument 310 in accordance with the instruction value acquired by the instruction value acquirer 313. When the control amount is acquired as the instruction value, the controller 314 controls the output electrical power amount so as to bring the output electrical power amount closer to this control amount. When the target value is acquired as the instruction value, the controller 314 controls the output electrical power amount so as to bring the received electrical power amount at the power receiving point closer to this target value.

In Fig. 3, the characteristic notifier 311 is a component of the electrical instrument 310, but is not an essential component thereof. For example, when the characteristic is not used in the calculation of the control amount, the characteristic notifier 311 is not needed.

In Fig. 3, the received electrical power amount acquirer 312 is a component of the electrical instrument 310, but is not an essential component thereof. For example, the received electrical power amount acquirer 312 may be mounted on a separate device. Then, the controller 314 may use the received electrical power amount acquired by this separate device.

Any other component may be mounted on a separate device. In this case, the electrical instrument 310 does not have to include the component mounted on the separate device. The electrical instrument 310 may include a storage for storing, for example, the characteristic, the received electrical power amount, the control amount, the target value, and the instruction value. The electrical instrument 310 may include a communication unit to communicate with the received electrical power control device 200 and other devices in the consumer facility 300.

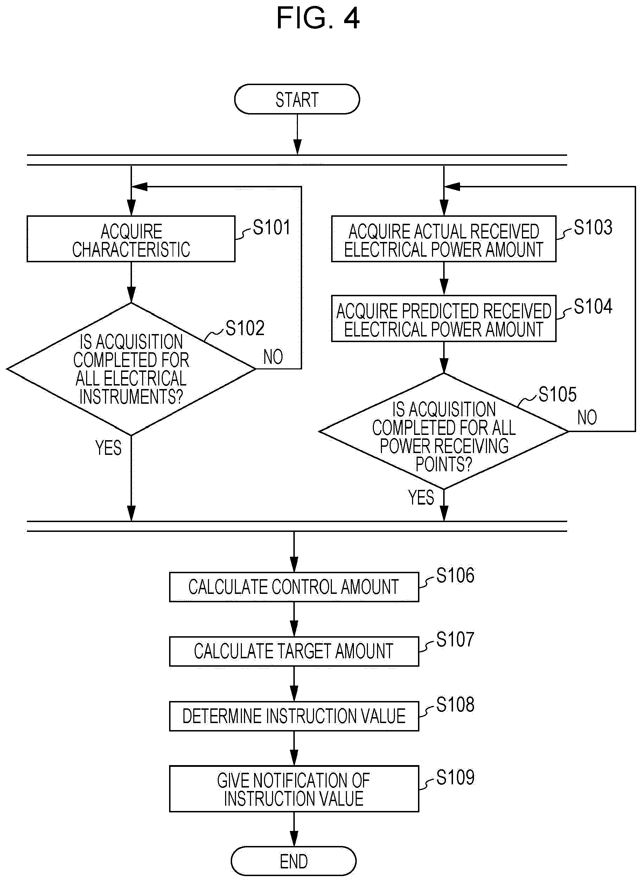

Fig. 4 is a flowchart of a process of the received electrical power control device 200 illustrated in Fig. 2. The received electrical power control device 200 determines the instruction value according to the process illustrated in Fig. 4.

First, at step S101, the characteristic acquirer 201 acquires the characteristic of the electrical instrument 310. Then, the characteristic acquirer 201 transmits this characteristic to the control amount calculator 203.

Next, at step S102, the characteristic acquirer 201 determines whether the characteristics of all electrical instruments 310 are acquired. When the characteristics of all electrical instruments 310 are acquired (Yes at step S102), the characteristic acquirer 201 ends the process. When the characteristics of all electrical instruments 310 are not acquired (No at step S102), the characteristic acquirer 201 executes the processing at step S101 for the electrical instrument 310 the characteristic of which is not acquired.

The characteristic acquirer 201 may end the process if the processing at steps S101 and S102 is executed a certain number of times or for a certain time period while the characteristics of all electrical instruments 310 are not acquired.

For example, when the characteristics of all electrical instruments 310 do not need to be acquired, the characteristic acquirer 201 may determine whether the characteristic is acquired from not all but part of the electrical instruments 310. Specifically, the characteristic acquirer 201 may determine whether the characteristic is acquired from the electrical instrument 310 as a control target.

At step S103, the received electrical power amount acquirer 202 acquires the actual received electrical power amount at the power receiving point. Then, the received electrical power amount acquirer 202 transmits this actual received electrical power amount to the control amount calculator 203.

Then, at step S104, the received electrical power amount acquirer 202 acquires the predicted received electrical power amount at the power receiving point. After that, the received electrical power amount acquirer 202 transmits this predicted received electrical power amount to the control amount calculator 203 and the target value calculator 204. For example, the received electrical power amount acquirer 202 acquires the predicted received electrical power amount based on Formulas (1) and (2) below.

$$\text{(Predicted Received Electrical Power Amount)} =$$
$$\text{(Actual Consumed Electrical Power Amount)} \times \text{(Remaining Period)} \div \text{(Elapsed Period)}$$

Formula (1)

$$\text{(Actual Consumed Electrical Power Amount)} =$$
$$\text{(Actual Received Electrical Power Amount)} + \text{(Actual Discharge Electrical Power Amount)}$$

Formula (2)

In Formula (1), the actual consumed electrical power amount is the electrical power amount consumed by the consumer facility 300 in the elapsed period of the electrical power service providing period, and is calculated based on Formula (2). The remaining period is the rest of the electrical power service providing period. The elapsed period is an elapsed period of the electrical power service providing period.

The actual received electrical power amount in Formula (2) is the electrical power amount received at the power receiving point from the electrical power system in the elapsed period of the electrical power service providing period, and specifically, is the actual received electrical power amount acquired at step S103. The actual discharge electrical power amount is the discharge electrical power amount of the battery in the elapsed period when the consumer facility 300 includes the battery as the electrical instrument 310. The received electrical power amount acquirer 202 may acquire the discharge electrical power amount of the battery from the battery so as to acquire the predicted received electrical power amount.

When the consumer facility 300 does not include the battery as the electrical instrument 310, the actual discharge electrical power amount may be treated as zero. In addition, in place of Formula (2), the actual consumed electrical power amount may be acquired from the electrical instrument 310 or the consumer facility 300.

The above-described method of acquiring the predicted received electrical power amount is an example, and the method of acquiring the predicted received electrical power amount is not limited to the above-described example. For example, the received electrical power amount acquirer 202 may acquire the predicted received electrical power amount based on, for example, past statistical information irrespective of the actual received electrical power amount. In this case, the received electrical power amount acquirer 202 may acquire the predicted received electrical power amount before acquiring the actual received electrical power amount, or may acquire the actual received electrical power amount and the predicted received electrical power amount in parallel. In place of Formula (1), for example, a regression model or a neural network model may be used.

At step S105, the received electrical power amount acquirer 202 determines whether the actual received electrical power amount and the predicted received electrical power amount are acquired for all power receiving points. If the actual received electrical power amount and the predicted received electrical power amount are acquired for all power receiving points (Yes at step S105), the received electrical power amount acquirer 202 ends the process.

If the actual received electrical power amount and the predicted received electrical power amount are yet to be acquired for all power receiving points (No at step S105), the received electrical power amount acquirer 202 executes the processing at steps S103 and S104 for any power receiving point for which the acquisition is not performed.

If the processing at steps S103 to S105 is executed a certain number of times or a certain time period while the actual received electrical power amount and the predicted received electrical power amount are yet to be acquired for all power receiving points, the received electrical power amount acquirer 202 may end the process.

For example, when the actual received electrical power amount and the predicted received electrical power amount do not need to be acquired for all power receiving points, the received electrical power amount acquirer 202 may determine whether the actual received electrical power amount and the predicted received electrical power amount are acquired for not all but some power receiving points. Specifically, the received electrical power amount acquirer 202 may determine whether the actual received electrical power amount and the predicted received electrical power amount are acquired for the power receiving point corresponding to the electrical instrument 310 as a control target.

After the characteristics of all electrical instruments 310 are acquired, and the actual received electrical power amount and the predicted received electrical power amount are acquired for all power receiving points, the control amount calculator 203 calculates the control amounts of the electrical instruments 310 at step S106. The control amount calculator 203 calculates the control amount of each electrical instrument 310 by, for example, Formulas (3) and (4). Formulas (3) and (4) are exemplary, and an optimization method or the like may be used.

$$\text{Total Received Electrical Power Amount}_i =$$
$$\sum_j \text{Actual Received Electrical Power Amount}_{ij} + \sum_j \text{Predicted Received Electrical Power Amount}_{ij}$$

Formula (3)

$$\text{Control Amount}_{ik} =$$
$$\frac{\text{Characteristic Value}_{ik}}{\sum_k \text{Characteristic Value}_{ik}} \times (\text{Total Received Electrical Power Amount}_i - \text{Target Received Electrical Power Amount}_i)$$

Formula (4)

In Formula (3), the symbol i is an identifier indicating the power service providing point, and the minimum and maximum values thereof are one and the number of power service providing points, respectively. The symbol j is an identifier indicating the power receiving point. the symbol ij is an identifier indicating the power receiving point that belongs to the power service providing point i. Thus, (Actual Received Electrical Power Amount)$_{ij}$ and (Predicted Received Electrical Power Amount)$_{ij}$ are the actual received electrical power amount and the predicted received electrical power amount, respectively, at (Power Receiving Point)$_{ij}$ that belongs to (Power Service Providing Point)$_i$.

Formula (3) includes the sum of (Predicted Received Electrical Power Amount)$_{ij}$ acquired based on Formula (1), but (Predicted Received Electrical Power Amount)$_i$ may be acquired separately from (Predicted Received Electrical Power Amount)$_{ij}$.

In Formula (4), (Target Received Electrical Power Amount)$_i$ is a target received electrical power amount predetermined as a target of the electrical power amount received at (Power Service Providing Point)$_i$ from the electrical power system. The symbol k is an identifier indicating the electrical instrument 310. The symbol ik is an identifier indicating the electrical instrument 310 that belongs to (Power Service Providing Point)$_i$. (Control Amount)$_{ik}$ is the control amount corresponding to the electrical instrument 310 identified with ik. (Characteristic Value)$_{ik}$ is the characteristic value of the electrical instrument 310 identified with ik.

(Characteristic Value)$_{ik}$ is set in accordance with the characteristic acquired at step S101. (Characteristic Value)$_{ik}$ may be a controllable amount of the electrical instrument 310. The controllable amount of the electrical instrument 310 corresponds to the input/output electrical power amount that the electrical instrument 310 can adjust (change).

When the electrical instrument 310 is the battery, (Characteristic Value)$_{ik}$ may be a dischargeable amount or chargeable amount of the battery. For example, when the reverse power flow is restricted, the dischargeable amount is a minimum value among the remaining capacity of the battery, the rated output capacity of the battery in a predetermined time, and the consumed electrical power amount of the consumer facility 300 in the predetermined time. The chargeable amount is a minimum value among an empty capacity (rated capacity - remaining capacity) of the battery and the rated input capacity of the battery in a predetermined time.

The dischargeable amount and the chargeable amount may be indicated as differences (changeable amounts) relative to the current discharge electrical power amount and the current charge electrical power amount, respectively.

When the electrical instrument 310 is the load, (Characteristic Value)$_{ik}$ may be the controllable consumed electrical power amount of the load. The controllable consumed electrical power amount of the load corresponds to a consumed electrical power amount that can be adjusted (changed) by the load. The controllable consumed electrical power amount of the load may be indicated as a difference (changeable amount) relative to the current consumed electrical power amount.

When the electrical instrument 310 is the generator, (Characteristic Value)$_{ik}$ may be the controllable output electrical power amount of the generator. The controllable output electrical power amount of the generator corresponds to an output electrical power amount that can be adjusted (changed) by the generator. For example, when the reverse power flow is restricted, the controllable output electrical power amount of the generator is a minimum value among the rated output capacity of the generator in a predetermined time and the consumed electrical power amount of the consumer facility 300 in the predetermined time. The controllable output electrical power amount of the generator may be indicated as a difference (changeable amount) relative to the current output electrical power amount.

(Characteristic Value)$_{ik}$ is not limited to the controllable amount of the electrical instrument 310. For example, when the electrical instrument 310 is the battery, the remaining capacity of the battery may be directly used as (Characteristic Value)$_{ik}$. When the electrical instrument 310 is the load, the consumed electrical power amount of the load may be directly used as (Characteristic Value)$_{ik}$. When the electrical instrument 310 is the generator, the output electrical power amount of the generator may be directly used as (Characteristic Value)$_{ik}$.

The characteristic acquirer 201 may acquire (Characteristic Value)$_{ik}$ (controllable amount, for example) described above as a characteristic.

In Formula (4), the control amount calculator 203 proportionally distributes the difference between the (Total Received Electrical Power Amount)$_i$ and (Target Received Electrical Power Amount)$_i$ according to (Characteristic Value)$_{ik}$. However, for example, when (Characteristic Value)$_{ik}$ is the controllable amount of the electrical instrument 310, the control amount calculator 203 may allocate (Control Amount)$_{ik}$ in the range of (Characteristic Value)$_{ik}$ in descending order from the electrical instrument 310 having the largest (Characteristic Value)$_{ik}$. In other words, the control amount calculator 203 may allocate (Control Amount)$_{ik}$ in the range of the controllable amount in descending order from the electrical instrument 310 having the largest controllable amount.

Alternatively, the control amount calculator 203 may equally distribute the difference between the total amount i of received electrical power and (Target Received Electrical Power Amount)$_i$ independently of (Characteristic Value)$_{ik}$. Alternatively, when |(total Received Electrical Power Amount)$_i$ - (Target Received Electrical Power Amount)$_i$| < $\alpha_i$ (Control Amount)$_{ik}$ may be set to zero. The symbol $\alpha_i$ is a constant corresponding to a deadband of (Power Service Providing Point)$_i$.

For example, the control amount calculator 203 may calculate the control amount at a resolution equal to or higher than the minimum output resolution of the electrical instrument 310. The minimum output resolution of the electrical instrument 310 is a minimum resolution predetermined for the electrical instrument 310, and corresponds to the gradation of the output amount of the electrical instrument 310. The control amount calculator 203 may allocate electrical power amounts having a finer fraction than the minimum resolution to other electrical instruments 310.

At step S107, the target value calculator 204 calculates the target value of the received electrical power amount at the power receiving point by Formula (5) below.

$$\text{Target Value}_j = \text{Predicted Received Electrical Power Amount}_j - \sum_k \text{Control Amount}_{jk} \qquad \text{Formula (5)}$$

In Formula (5), the symbol j is an identifier indicating the power receiving point. The symbol k is an identifier indicating the electrical instrument 310. The symbol jk is an identifier indicating the electrical instrument 310 that belongs to the power receiving point j. Thus, the target value calculator 204 calculates, as the target value, the difference between the predicted received electrical power amount at the power receiving point and the control amount for at least one electrical instrument 310 corresponding to the power receiving point.

Next, at step S108, the instruction value determiner 205 receives the control amount and the target value from the control amount calculator 203 and the target value calculator 204, respectively, and determines the instruction value.

For example, the instruction value determiner 205 divides the electrical power service providing period into a first period including the start time of the period and a second period including the end time thereof. Then, the instruction value determiner 205 determines the control amount as the instruction value in the first period, and determines the target value as the instruction value in the second period.

Alternatively, for example, the instruction value determiner 205 determines the control amount as the instruction value for the electrical instrument 310 connected with the power receiving point at which the received electrical power has a variation larger than a predetermined threshold. The instruction value determiner 205 determines the target value as the instruction value for the electrical instrument 310 connected with the power receiving point at which the received electrical power has a variation smaller than the predetermined threshold.

Alternatively, for example, when a solar power generating system is connected with the power receiving point, the instruction value determiner 205 determines the control amount as the instruction value for an electrical instrument 310 connected with the power receiving point at which the solar power generating system has an output variation larger than a predetermined threshold. The instruction value determiner 205 determines the target value as the instruction value for an electrical instrument 310 connected with the power receiving point at which the solar power generating system has an output variation smaller than the predetermined threshold.

The state in which the solar power generating system is connected with the power receiving point means that the solar power generating system is associated and connected with the power receiving point, that is, the consumer facility 300 corresponding to the power receiving point includes the solar power generating system.

Next, at step S109, the instruction value notifier 206 notifies the electrical instrument 310 of the instruction value determined by the instruction value determiner 205. Specifically, the instruction value notifier 206 transmits the instruction value to the electrical instrument 310 through the communication line 120. The instruction value notifier 206 may transmit, together with the instruction value, an identifier indicating whether the instruction value is the target value or the control amount.

As described above, the received electrical power control device 200 does not have to include the characteristic acquirer 201 nor the instruction value notifier 206. In this case, the received electrical power control device 200 does not need to perform the processing at steps S101, S102, and S109.

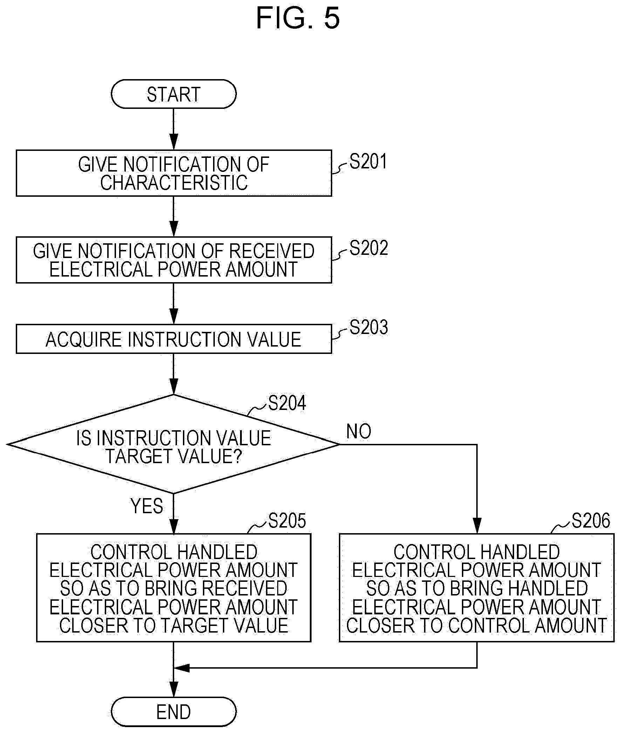

Fig. 5 is a flowchart of a process of the electrical instrument 310 illustrated in Fig. 3. The electrical instrument 310 controls the electrical power amount according to the process illustrated in Fig. 5.

First, at step S201, the characteristic notifier 311 notifies the received electrical power control device 200 of the characteristic of the electrical instrument 310. Specifically, the characteristic notifier 311 transmits the characteristic of the electrical instrument 310 to the received electrical power control device 200 through the communication line 120.

Next, at step S202, the received electrical power amount acquirer 312 acquires the received electrical power amount at the power receiving point of the consumer facility 300, and notifies the received electrical power control device 200 of this received electrical power amount. Specifically, the received electrical power amount acquirer 312 transmits this received electrical power amount to the received electrical power control device 200 through the communication line 120.

The processing at steps S201 and S202 may be simultaneously executed. In addition, the cycle of executing step S201 and the cycle of executing step S202 may differ from each other.

Next, at step S203, the instruction value acquirer 313 acquires the instruction value determined by the received electrical power control device 200. For example, the instruction value acquirer 313 acquires the instruction value by receiving the instruction value transmitted from the received electrical power control device 200.

Next, at step S204, the controller 314 determines whether the instruction value is the target value. For example, the controller 314 acquires an identifier indicating whether the instruction value is the target value or the control amount, and determines whether the instruction value is the target value or the control amount based on this identifier.

If the instruction value is a target value (Yes at step S204), at step S205, the controller 314 brings the received electrical power amount at the power receiving point closer to the target value by controlling the handled electrical power amount of the electrical instrument 310. In other words, the controller 314 controls the handled electrical power amount so as to bring the received electrical power amount at the power receiving point closer to the target value.

If the instruction value is not the target value (No at step S204), in other words, if the instruction value is the control amount, at step S206, the controller 314 brings the handled electrical power amount closer to the control amount by controlling the handled electrical power amount of the electrical instrument 310. In other words, the controller 314 controls the handled electrical power amount so as to bring the handled electrical power amount closer to the control amount.

As described above, the electrical instrument 310 does not have to include the characteristic notifier 311 nor the received electrical power amount acquirer 312. In this case, the electrical instrument 310 does not need to perform the processing at steps S201 and S202.

A specific example is described below. This specific example has the following assumptions. The electrical power service providing period is 30 minutes, the remaining period is 15 minutes, and the elapsed period is 15 minutes. The number of power service providing points is one, and the target received electrical power amount is 10 kWh. Two power receiving points belong to the power service providing point, and one electrical instrument 310 is connected with each power receiving point. The electrical instrument 310 is a battery, and has a rated capacity of 4 kWh and a discharging rate of 1 C.

When the actual consumed electrical power amount at each power receiving point is 3 kWh, Formula (1) yields 3 kWh as the predicted received electrical power amount at the power receiving point.

Formula (3) yields 12 kWh as the total received electrical power amount, which exceeds the target received electrical power amount of 10 kWh by 2 kWh.

When the characteristic of the electrical instrument 310 is calculated from the rated capacity and the discharging rate, the characteristic of the electrical instrument 310 is 4 kWh $\times$ 0.25 h = 1 kWh. Formula (4) yields 1 kWh as the control amount of each electrical instrument 310.

Finally, Formula (5) yields a target value of 2 kWh.

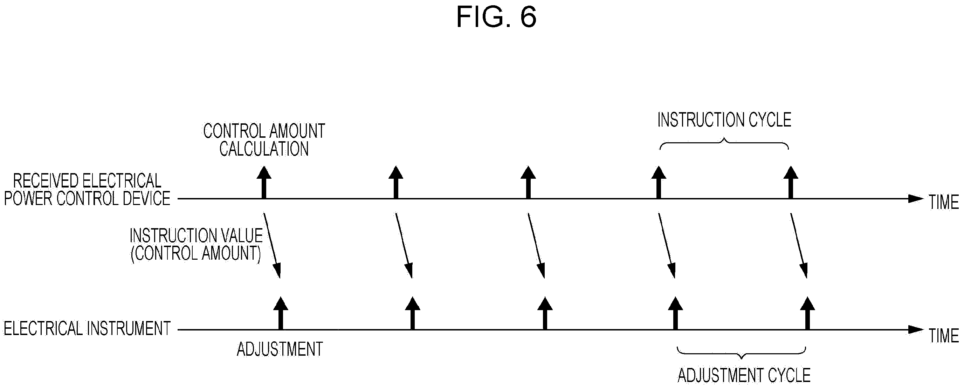

Fig. 6 is a conceptual diagram of the instruction cycle and the adjustment cycle in a reference example different from the present embodiment. In Fig. 6, horizontal arrows represent a time axis, and the time increases toward the right. Virtual arrows represent the instruction cycle of a received electrical power control device in the reference example, or the adjustment cycle of an electrical instrument in the reference example. Fig. 6 does not illustrate the processing of transmission of the characteristic and the received electrical power amount to the received electrical power control device by the electrical instrument.

In this reference example, the received electrical power control device calculates and transmits the control amount as the instruction value. Then, the electrical instrument receives the control amount as the instruction value, and controls (adjusts) the electrical power amount in accordance with the control amount. Thus, as illustrated in Fig. 6, the instruction cycle of the received electrical power control device is equal to the adjustment cycle of the electrical instrument. Accordingly, as the number of times of adjustment to bring the total received electrical power amount closer to a predetermined received electrical power target amount increases, the number of times of instruction increases. This results in an increased amount of communication traffic.

Then, when the electrical instrument cannot receive the instruction value at time t from the received electrical power control device due to, for example, communication delay, the electrical instrument stops the adjustment or performs the adjustment corresponding to the instruction value received at time t-1, for example. This may prevent reduction in the difference between the total received electrical power amount and the target received electrical power amount at the power service providing point. Moreover, the electrical instrument cannot adjust the electrical power amount by itself for a large difference between the total received electrical power amount and the target received electrical power amount.

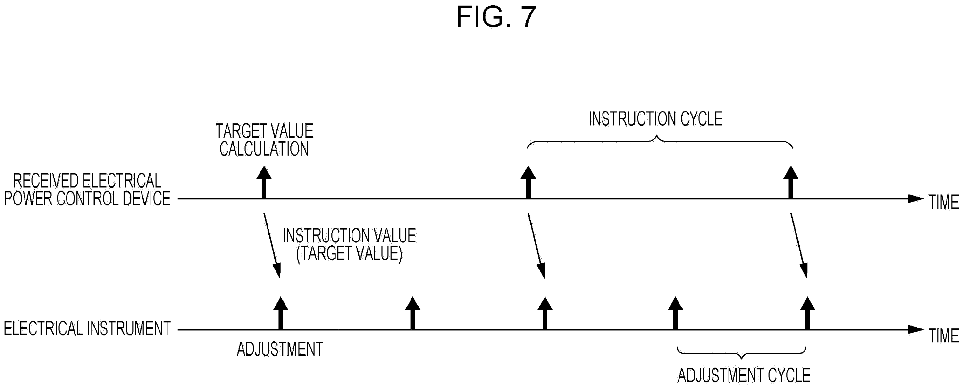

Fig. 7 is a conceptual diagram of the instruction cycle of the received electrical power control device 200 and the adjustment cycle of the electrical instrument 310 in an example of the present embodiment. In Fig. 7, horizontal arrows represent a time axis, and the time increases toward the right. Vertical arrow represent the instruction cycle of the received electrical power control device 200 or the adjustment cycle of the electrical instrument 310. Fig. 7 does not illustrate the processing of transmission of the characteristic and the received electrical power amount to the received electrical power control device 200 by the electrical instrument 310.

As illustrated in Fig. 7, the adjustment cycle of the electrical instrument 310 can be set shorter than the instruction cycle of the received electrical power control device 200. Thus, as illustrated in Fig. 7, even when the received electrical power control device 200 does not transmit an instruction value, the electrical instrument 310 can autonomously perform the adjustment so as to bring the received electrical power amount at the power receiving point closer to another instruction value.

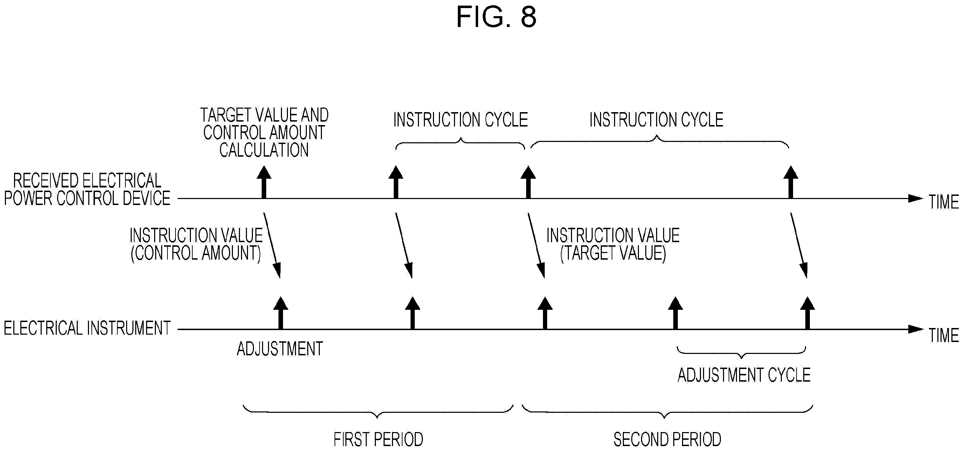

Fig. 8 is a conceptual diagram of the instruction cycle of the received electrical power control device 200 and the adjustment cycle of the electrical instrument 310 in another example of the present embodiment. In Fig. 8, horizontal arrows represent a time axis, and the time increases toward the right. Vertical arrows represent the instruction cycle of the received electrical power control device 200 or the adjustment cycle of the electrical instrument 310. Fig. 8 does not illustrate the processing of transmission of the characteristic and the received electrical power amount to the received electrical power control device 200 by the electrical instrument 310.

In Fig. 8, the received electrical power control device 200 transmits the control amount as the instruction value in the first period, and transmits the target value as the instruction value in the second period.

As illustrated in Fig. 8, in the second period, the adjustment cycle of the electrical instrument 310 according to the present embodiment can be set shorter than the instruction cycle of the received electrical power control device 200 according to the present embodiment. Thus, as illustrated in Fig. 8, even when the received electrical power control device 200 does not transmit an instruction value, the electrical instrument 310 can autonomously perform the adjustment so as to bring the received electrical power amount at the power receiving point closer to another instruction value.

The instruction value notifier 206 of the received electrical power control device 200 may have a longer instruction cycle when the target value is used as the instruction value than when the control amount is used as the instruction value. Similarly, each component of the received electrical power control device 200 may have a longer processing cycle for determining the instruction value when the target value is used as the instruction value than when the control amount is used as the instruction value.

The instruction value determiner 205 or the instruction value notifier 206 of the received electrical power control device 200 may correct the instruction value corresponding to the remaining period based on an instruction cycle.

For example, the instruction value determiner 205 may correct the target value or the control amount by multiplying the target value or the control amount by the ratio of the length of the instruction cycle relative to the length of the remaining period, and determine this corrected target value or control amount as the instruction value. Alternatively, the instruction value notifier 206 may correct the instruction value by multiplying the instruction value by the ratio of the length of the instruction cycle relative to the length of the remaining period, and give a notification of the instruction value thus corrected.

Alternatively, the controller 314 of the electrical instrument 310 may correct the instruction value corresponding to the remaining period based on the adjustment cycle. For example, the controller 314 may correct the instruction value by multiplying the instruction value by the ratio of the length of the adjustment cycle relative to the length of the remaining period, and control the electrical power amount handled by the electrical instrument 310 in accordance with the instruction value thus corrected.

(Summary and Supplement)

The received electrical power control device 200 described in the above embodiment controls the electrical power amount handled by the at least one electrical instrument 310 associated and connected with each of one or more power receiving points that receive electrical power from the electrical power system. In this manner, the received electrical power control device 200 brings the total received electrical power amount, which is the electrical power amount received at one or more power receiving points from the electrical power system in a predetermined period, closer to the predetermined received electrical power target amount.

Specifically, the received electrical power control device 200 includes the received electrical power amount acquirer 202, the control amount calculator 203, the target value calculator 204, and the instruction value determiner 205.

The received electrical power amount acquirer 202 acquires the actual received electrical power amount and the predicted received electrical power amount for each of one or more power receiving points. The actual received electrical power amount is the actual value of the electrical power amount received at each of one or more power receiving points from the electrical power system in the elapsed period of the predetermined period. The predicted received electrical power amount is the predicted value of the electrical power amount to be received at each of one or more power receiving points from the electrical power system in the remaining period of the predetermined period.

The control amount calculator 203 calculates a control amount. The control amount is the electrical power amount obtained by distributing the difference between the predetermined received electrical power target amount and the total received electrical power amount calculated from the actual received electrical power amount and the predicted received electrical power amount, to the at least one electrical instrument 310 connected with each of one or more power receiving points.

The target value calculator 204 calculates, for each of the one or more power receiving points, the difference between the predicted received electrical power amount at the power receiving point and the control amount for the at least one electrical instrument 310 connected with the power receiving point, as a target value of the electrical power amount received at the power receiving point from the electrical power system.

The instruction value determiner 205 determines, for each of the one or more power receiving points, the target value calculated by the target value calculator 204 as an instruction value for the at least one electrical instrument 310 connected with the power receiving point.

Accordingly, the received electrical power control device 200 can calculate the target value of the received electrical power amount from the control amount in accordance with the difference between the total received electrical power amount and the predetermined received electrical power target amount, and determine this target value as the instruction value. Thus, the received electrical power control device 200 can determine, as the instruction value, the target value consistent with the control amount for bringing the total received electrical power amount closer to the predetermined received electrical power target amount, and appropriately determine the instruction value for bringing the total received electrical power amount closer to the predetermined received electrical power target amount.

Furthermore, the received electrical power control device 200 can achieve a longer instruction cycle by determining, in place of the control amount, the target value of the received electrical power amount as the instruction value. In other words, even when the instruction cycle is longer than the adjustment cycle of the electrical instrument 310, it is possible to bring the total received electrical power amount closer to the predetermined received electrical power target amount.

For example, the instruction value determiner 205 selects one of the control amount and the target value as the instruction value. The instruction value determiner 205 determines the control amount as the instruction value if the control amount is selected as the instruction value, and determines the target value as the instruction value if the target value is selected as the instruction value.

Accordingly, the received electrical power control device 200 can select the instruction value for the electrical instrument 310 from the target value and the control amount. Thus, the received electrical power control device 200 can adaptively switch between the target value and the control amount as the instruction value for the electrical instrument 310.

For example, the instruction value determiner 205 selects the control amount as the instruction value in the first period including the start time of the predetermined period, and selects the target value as the instruction value in the second period including the end time of the predetermined period.

Accordingly, in a period in which the predicted received electrical power amount is assumed to have a low prediction accuracy because only a short time has passed since the start time, the control amount is used as the instruction value. On the other hand, in a period in which the predicted received electrical power amount is assumed to have a high prediction accuracy because a long time has passed since the start time, the target value is used as the instruction value. This use of the target value as the instruction value in the period in which the predicted received electrical power amount is assumed to have a high prediction accuracy allows for a longer instruction cycle while maintaining the control accuracy.

For example, the instruction value determiner 205 selects the control amount as the instruction value for the at least one electrical instrument 310 connected with, among one or more power receiving points, a power receiving point at which the actual received electrical power amount or the predicted received electrical power amount has a variation larger than the predetermined threshold. On the other hand, the instruction value determiner 205 selects the target value as the instruction value for the at least one electrical instrument 310 connected with, among one or more power receiving points, a power receiving point at which the actual received electrical power amount or the predicted received electrical power amount has a variation equal to or smaller than the predetermined threshold.

Accordingly, the control amount is used as the instruction value when the predicted received electrical power amount is assumed to have a low prediction accuracy because the actual received electrical power amount or the predicted received electrical power amount has a large variation. On the other hand, the target value is used as the instruction value when the predicted received electrical power amount is assumed to have a high prediction accuracy because the actual received electrical power amount or the predicted received electrical power amount has a small variation. This use of the target value as the instruction value when the predicted received electrical power amount is assumed to have a high prediction accuracy allows for a longer instruction cycle while maintaining the control accuracy.

As another example, the solar power generating device is associated and connected with one of the one or more power receiving points.

In this example, when the output electrical power amount of the solar power generating device has a variation larger than the predetermined threshold, the instruction value determiner 205 selects the control amount as the instruction value for the at least one electrical instrument 310 connected with the power receiving point. On the other hand, when the output electrical power amount of the solar power generating device has a variation equal to or smaller than the predetermined threshold, the instruction value determiner 205 selects the target value as the instruction value for the at least one electrical instrument 310 connected with the power receiving point.

Accordingly, when the predicted received electrical power amount is assumed to have a low prediction accuracy because the output electrical power amount of the solar power generating device has a large variation, the control amount is used as the instruction value. On the other hand, when the predicted received electrical power amount is assumed to have a high prediction accuracy because the output electrical power amount of the solar power generating device has a small variation, the target value is used as the instruction value. This use of the target value as the instruction value when the predicted received electrical power amount is assumed to have a high prediction accuracy allows for a longer instruction cycle while maintaining the control accuracy.

As another example, the received electrical power control device 200 further includes the instruction value notifier 206 that notifies the at least one electrical instrument 310 of the instruction value determined by the instruction value determiner 205. This allows the electrical instrument 310 to receive the notification of the instruction value given by the received electrical power control device 200 and control the electrical power amount in accordance with the instruction value thus received.

As another example, the at least one electrical instrument 310 includes at least one of a battery, a load, and a generator. This allows the battery, the load, or the generator as the electrical instrument 310 to control the electrical power amount.

As another example, the received electrical power control device 200 further includes the characteristic acquirer 201 that acquires the characteristic of the at least one electrical instrument 310. The characteristic includes at least one of the remaining capacity of the battery, the rated capacity of the battery, the rated output capacity of the battery, the rated input capacity of the battery, the consumed electrical power amount of the load, the controllable consumed electrical power amount of the load, the output electrical power amount of the generator, and the rated output capacity of the generator. The control amount calculator 203 distributes the difference between the total received electrical power amount and the predetermined received electrical power target amount in accordance with the characteristic.

Accordingly, the received electrical power control device 200 can appropriately distribute the difference between the total received electrical power amount and the predetermined received electrical power target amount to the electrical instruments 310 in accordance with the characteristic of the electrical instrument 310 such as the remaining capacity of the battery.

As another example, the electrical instrument 310 acquires the instruction value determined by the received electrical power control device 200, and charges and discharges electrical power. Specifically, the electrical instrument 310 includes the instruction value acquirer 313 that acquires the instruction value, and the controller 314 that controls the charging or discharging electrical power amount of the electrical instrument 310 in accordance with the instruction value acquired by the instruction value acquirer 313.

Then, when the control amount is acquired as the instruction value, the controller 314 controls the charging or discharging electrical power amount of the electrical instrument 310 so as to bring the charging or discharging electrical power amount of the electrical instrument 310 closer to the control amount. When the target value is acquired as the instruction value, the controller 314 controls the charging or discharging electrical power amount of the electrical instrument 310 so as to bring the received electrical power amount, which is the electrical power amount received from the electrical power system at the power receiving point with which the electrical instrument 310 is associated and connected among one or more power receiving points, closer to the target value.

Accordingly, the electrical instrument 310 such as the battery that charges and discharges electrical power can acquire the control amount or the target value as the instruction value and control the electrical power amount in accordance with the control amount or the target value acquired as the instruction value.

As another example, the electrical instrument 310 acquires the instruction value determined by the received electrical power control device 200, and generates and outputs electrical power. Specifically, the electrical instrument 310 includes the instruction value acquirer 313 that acquires the instruction value, and the controller 314 that controls the output electrical power amount of the electrical instrument 310 in accordance with the instruction value acquired by the instruction value acquirer 313.

Then, when the control amount is acquired as the instruction value, the controller 314 controls the output electrical power amount of the electrical instrument 310 so as to bring the output electrical power amount of the electrical instrument 310 closer to the control amount. When the target value is acquired as the instruction value, the controller 314 controls the output electrical power amount of the electrical instrument 310 so as to bring the received electrical power amount, which is the electrical power amount received from the electrical power system at the power receiving point with which the electrical instrument 310 is associated and connected among one or more power receiving points, closer to the target value.

Accordingly, the electrical instrument 310 such as the generator that generates and outputs electrical power can acquire the control amount or the target value as the instruction value and control the electrical power amount in accordance with the control amount or the target value acquired as the instruction value.

In the embodiment described above, each component may include dedicated hardware, or may be achieved through execution of a software program suitable for the component. The component may be achieved through readout and execution of a software program recorded on a recording medium such as a hard disk or a semiconductor memory by a program executer such as a central processing unit (CPU) or a processor. Software that achieves, for example, the received electrical power control device 200 according to the embodiment described above is a program described below.

This program causes a computer to execute a received electrical power control method of controlling an electrical power amount handled by at least one electrical instrument associated and connected with each of one or more power receiving points that receive electrical power from an electrical power system, so as to bring a total received electrical power amount closer to a predetermined received electrical power target amount, the total received electrical power amount being an electrical power amount received at each of the power receiving points from the electrical power system in a predetermined period, the method comprising: a received electrical power amount acquiring step of acquiring an actual received electrical power amount that is an actual value of an electrical power amount received at each power receiving point from the electrical power system in an elapsed period of the predetermined period, and a predicted received electrical power amount that is a predicted value of the electrical power amount to be received at the power receiving point from the electrical power system in a remaining period of the predetermined period; a control amount calculating step of calculating a control amount that is an electrical power amount obtained by distributing a difference between the predetermined received electrical power target amount and the total received electrical power amount calculated from the actual received electrical power amount and the predicted received electrical power amount, to the at least one electrical instrument connected with each power receiving point; a target value calculating step of calculating, for each power receiving point, a difference between the predicted received electrical power amount for the power receiving point and the control amount for the at least one electrical instrument connected with the power receiving point, as a target value of the electrical power amount received at the power receiving point from the electrical power system; and an instruction value determining step of determining the target value calculated at the target value calculating step for each power receiving point, as an instruction value for the at least one electrical instrument connected with the power receiving point.

Each component included in, for example, the received electrical power control device 200 and the electrical instrument 310 may be a circuit. These circuits may constitute one circuit as a whole or may be separate circuits. Each of these circuits may be a general-purpose circuit or a dedicated circuit.

The above description based on the embodiment is made of the received electrical power control device 200, the electrical instrument 310, and others according to one or a plurality of aspects, but the present disclosure is not limited to the embodiment. Various modifications of the present embodiment thought of by those skilled in the art and any embodiment as a combination of components according to different embodiments may be included in the range of the one or plurality of aspects without departing from the scope of the present disclosure as defined by the appended claims.

For example, processing executed by a particular component in the embodiment described above may be executed by another component in place of the particular component. In addition, a plurality of pieces of processing may be executed in a different order or in parallel.

The present disclosure is applicable to a received electrical power control device or the like for bringing the total received electrical power amount closer to the predetermined received electrical power target amount, and also to a received electrical power control system, a consumer facility control system, a battery management system, a load management system, and the like.

**Claims**

1. A received electrical power control method comprising:

   acquiring (S103, S104) actual received electrical power amounts that are actual values of the electrical power amounts received at power receiving points from an electrical power system (100) in an elapsed period of a predetermined period, and predicted received electrical power amounts that are predicted values of the electrical power amounts to be received at the power receiving points from the electrical power system (100) in a remaining period of the predetermined period;
   determining a total received electrical power amount in the predetermined period based on the actual received electrical power amounts and the predicted received electrical power amounts;
   determining a total control amount that is a difference between a total received electrical power target amount and the total received electrical power amount;
   determining (S106) a control amount for each of the power receiving points based on the total control amount;
   determining (S107) a target value, for each power receiving point, the target value is a difference between the predicted received electrical power amount for the power receiving point and the control amount for the power receiving point;
   determining (S108) an instruction value for one or more electrical instruments (310) connected with the power receiving point based on the target value.

2. The received electrical power control method according to claim 1, wherein in the determining step (S108),
   one of the control amount and the target value is selected as the instruction value,
   the control amount is determined as the instruction value when the control amount is selected as the instruction value, and
   the target value is determined as the instruction value when the target value is selected as the instruction value.

3. The received electrical power control method according to claim 2, wherein in the determining step (S108),
   the control amount is selected as the instruction value for a first period including a start time of the predetermined period, and
   the target value is selected as the instruction value for a second period including an end time of the predetermined period.

4. The received electrical power control method according to claim 2, wherein in the determining step (S108),
   the control amount is selected as the instruction value for the one or more electrical instruments (310) connected with, among the one or more power receiving points, a power receiving point at which the actual received electrical power amount or the predicted received electrical power amount has a variation larger than a predetermined threshold, and
   the target value is selected as the instruction value for the one or more electrical instruments (310) connected with, among the one or more power receiving points, a power receiving point at which the actual received electrical power amount or the predicted received electrical power amount has a variation equal to or smaller than the predetermined threshold.

5. The received electrical power control method according to claim 2, wherein in the determining step (S108), in a case in which a solar power generating device is associated and connected with one power receiving point among the one or more power receiving points,

   (i) the control amount is selected as the instruction value for the at least one or more electrical instruments (310) connected with the one power receiving point when an output electrical power amount of the solar power generating device has a variation larger than a predetermined threshold, and

(ii) the target value is selected as the instruction value for the one or more electrical instruments (310) connected with the one power receiving point when the output electrical power amount of the solar power generating device has a variation equal to or smaller than the predetermined threshold.

6.  The received electrical power control method according to claim 1, further comprising: transmitting (S109) the instruction value to each of the one or more electrical instruments (310).

7.  The received electrical power control method according to claim 6, wherein the one or more electrical instruments (310) include one or more batteries, the method further comprising: acquiring (S101) a characteristic of the at least one or more batteries, wherein

the characteristic represents at least one of a remaining capacity of the battery, a rated capacity of the battery, a degradation state of the battery, a rated output capacity of the battery; and

in the determining step (S107), the difference between the total received electrical power amount and a predetermined received electrical power target amount is distributed in accordance with the characteristic.

8.  The received electrical power control method according to claim 1, wherein the at least one or more electrical instruments (310) include at least one of a battery, a load, and a generator

9.  A received electrical power control device (200) that controls an electrical power amount handled by at least one or more electrical instruments (310) associated and connected with each of one or more power receiving points that receive electrical power from an electrical power system (100), so as to bring a total received electrical power amount closer to a predetermined received electrical power target amount, the total received electrical power amount being the sum of electrical power amounts received at the power receiving points from the electrical power system (100) in a predetermined period, the device comprising:

a received electrical power amount acquirer (202) that acquires an actual received electrical power amount that is an actual value of the electrical power amount received at each power receiving point from the electrical power system (100) in an elapsed period of the predetermined period, and a predicted received electrical power amount that is a predicted value of the electrical power amount to be received at each power receiving point from the electrical power system (100) in a remaining period of the predetermined period;

a control amount calculator (203) that calculates a control amount that is the electrical power amount obtained by distributing a difference between the predetermined received electrical power target amount and the total received electrical power amount calculated from the actual received electrical power amount and the predicted received electrical power amount, to the at least one or more electrical instruments (310) connected with each power receiving point;

a target value calculator (204) that calculates, for each power receiving point, a difference between the predicted received electrical power amount for the power receiving point and the control amount for the at least one or more electrical instruments (310) connected with the power receiving point, as a target value of the electrical power amount received at the power receiving point from the electrical power system (100); and

an instruction value determiner (205) that determines the target value calculated by the target value calculator (204) for each power receiving point, as an instruction value for the at least one or more electrical instruments (310) connected with the power receiving point.

10. The received electrical power control device (200) according to claim 9, wherein the instruction value determiner (205) selects one of the control amount and the target value as the instruction value,

determines the control amount as the instruction value when the control amount is selected as the instruction value, and

determines the target value as the instruction value when the target value is selected as the instruction value.

**Patentansprüche**

1.  Steuerverfahren für empfangene elektrische Leistung, mit:

Beschaffen (S103, S104) von tatsächlichen empfangenen elektrischen Leistungsmengen, die tatsächliche Werte der elektrischen Leistungsmengen sind, die an Leistungsempfangspunkten von einem elektrischen Leistungssystem (100) in einem abgelaufenen Zeitraum einer vorbestimmten Periode empfangen wurden, und von prognostizierten empfangenen elektrischen Leistungsmengen, die prognostizierte Werte der elektrischen Leistungsmengen sind, die an den Leistungsempfangspunkten von dem elektrischen Leistungssystem (100) in einem verbleibendem Zeitraum der vorbestimmten Periode zu empfangen sind,

Bestimmen einer gesamten empfangenen elektrischen Leistungsmenge in der vorbestimmten Periode auf Basis der tatsächlichen empfangenen elektrischen Leistungsmengen und der prognostizierten empfangenen elektrischen Leistungsmengen,

Bestimmen einer Gesamtsteuermenge, die eine Differenz zwischen einer Zielmenge für eine gesamte empfangene elektrische Leistung und der gesamten empfangenen elektrischen Leistungsmenge ist,

Bestimmen (S106) einer Steuermenge für jeden der Leistungsempfangspunkte auf Basis der Gesamtsteuermenge,

Bestimmen (S107) eines Zielwertes für jeden Leistungsempfangspunkt, wobei der Zielwert eine Differenz zwischen der prognostizierten empfangenen elektrischen Leistungsmenge für den Leistungsempfangspunkt und der Steuermenge für den Leistungsempfangspunkt ist,

Bestimmen (S108) eines Instruktionswertes für ein oder mehrere elektrische Instrumente (310), die mit dem Leistungsempfangspunkt verbunden sind, auf Basis des Zielwerts.

2. Steuerverfahren für empfangene elektrische Leistung nach Anspruch 1, wobei in dem Bestimmungsschritt (S108), die Steuermenge oder der Zielwert als der Instruktionswert ausgewählt werden,

die Steuermenge als der Instruktionswert bestimmt wird, wenn die Steuermenge als der Instruktionswert ausgewählt wird, und

der Zielwert als der Instruktionswert bestimmt wird, wenn der Zielwert als der Instruktionswert ausgewählt wird.

3. Steuerverfahren für empfangene elektrische Leistung nach Anspruch 2, wobei in dem Bestimmungsschritt (S108) die Steuermenge als der Instruktionswert für einen ersten Zeitraum einschließlich einer Startzeit der vorbestimmten Periode ausgewählt wird und

der Zielwert als der Instruktionswert für einen zweiten Zeitraum einschließlich einer Endzeit der vorbestimmten Periode ausgewählt wird.

4. Steuerverfahren für empfangene elektrische Leistung nach Anspruch 2, wobei in dem Bestimmungsschritt (S108) die Steuermenge als der Instruktionswert für das eine oder die mehreren elektrischen Instrumente (310) ausgewählt wird, die mit einem Leistungsempfangspunkt aus dem einen oder den mehreren Leistungsempfangspunkten verbunden sind, bei dem die tatsächliche empfangene elektrische Leistungsmenge oder die prognostizierte empfangene elektrische Leistungsmenge eine Variation aufweist, die größer als ein vorbestimmter Schwellwert ist, und

der Zielwert als der Instruktionswert für das eine oder die mehreren elektrischen Instrumente (310) ausgewählt wird, die mit einem Leistungsempfangspunkt aus dem einen oder den mehreren Leistungsempfangspunkten verbunden sind, bei dem die tatsächliche empfangene elektrische Leistungsmenge oder die prognostizierte empfangene Leistungsmenge eine Variation aufweist, die gleich oder kleiner als der vorbestimmte Schwellwert ist.

5. Steuerverfahren für empfangene elektrische Leistung nach Anspruch 2, wobei in dem Bestimmungsschritt (S108) in einem Fall, in dem eine Solarkraftanlage mit einem Leistungsempfangspunkt aus dem einen oder den mehreren Leistungsempfangspunkten assoziiert und verbunden ist,

(i) die Steuermenge als der Instruktionswert für das wenigstens eine oder die mehreren elektrischen Instrumente (310) ausgewählt wird, die mit dem einen Leistungsempfangspunkt verbunden sind, wenn eine ausgegebene elektrische Leistungsmenge der Solarkraftvorrichtung eine Variation aufweist, die größer ist als der vorbestimmte Schwellenwert, und

(ii) der Zielwert als der Instruktionswert für das eine oder die mehreren elektrischen Instrumente (310) ausgewählt wird, die mit dem einen Leistungsempfangspunkt verbunden sind, wenn die ausgegebene elektrische Leistungsmenge der Solarkraftvorrichtung eine Variation aufweist, die gleich oder geringer als der vorbestimmte Schwellwert ist.

6. Steuerverfahren für empfangene elektrische Leistung nach Anspruch 1, ferner mit einem Übermitteln (S109) des Instruktionswerts an jedes des einen oder der mehreren elektrischen Instrumente (310).

7. Steuerverfahren für empfangene elektrische Leistung nach Anspruch 6, wobei das eine oder die mehreren elektrischen Instrumente (310) eine oder mehrere Batterien umfassen, wobei das Verfahren ferner ein Beschaffen (S101) einer Charakteristik der wenigstens einen oder mehreren Batterien umfasst, wobei

die Charakteristik wenigstens eins aus einer verbleibenden Kapazität der Batterie, einer nominellen Kapazität der Batterie, einem Degradationszustand der Batterie und einer nominellen Ausgabekapazität der Batterie repräsentiert und

in dem Bestimmungsschritt (S107) die Differenz zwischen der gesamten empfangenen elektrischen Leistungsmenge und einer vorbestimmten Zielmenge für empfangene elektrische Leistung entsprechend der Charakteristik verteilt wird.

8. Steuerverfahren für empfangene elektrische Leistung nach Anspruch 1, wobei das wenigstens eine oder die mehreren elektrischen Instrumente (310) wenigstens eins aus einer Batterie, einer Last und einer Generator umfassen.

9. Steuervorrichtung (200) für empfangene elektrische Leistung, die eine elektrische Leistungsmenge steuert, die von wenigstens einem oder mehreren elektrischen Instrumente (310) gehandhabt wird, die mit jedem von einem oder mehreren Leistungsempfangspunkten assoziiert und verbunden sind, die elektrische Leistung von einem elektrischen Leistungssystem (100) empfangen, um eine gesamte empfangene Leistungsmenge näher an eine vorbestimmte Zielmenge für empfangene elektrische Leistung zu bringen, wobei die gesamte empfangene elektrische Leistungsmenge die Summe von elektrischen Leistungsmengen ist, die an den Leistungsempfangspunkten von dem elektrischen Leistungssystem (100) in einer vorbestimmten Periode empfangen wird, wobei die Vorrichtung umfasst:

einen Beschaffer (202) für empfangene elektrische Leistungsmengen, der eine tatsächliche empfangene elektrische Leistungsmenge, die ein tatsächlicher Wert der elektrischen Leistungsmenge ist, die an jedem Leistungsempfangspunkt von dem elektrischen Leistungssystem (100) in einem abgelaufenen Zeitraum der vorbestimmten Periode empfangen wurde, und eine prognostizierte empfangene elektrische Leistungsmenge beschafft, die ein prognostizierter Wert der elektrischen Leistungsmenge ist, die an jedem Leistungsempfangspunkt von dem elektrischen Leistungssystem (100) in einem verbleibenden Zeitraum der vorbestimmten Periode zu empfangen ist,

einen Steuermengenkalkulator (203), der eine Steuermenge berechnet, die die elektrische Leistungsmenge ist, die durch Verteilen einer Differenz zwischen der vorbestimmten Zielmenge für empfangene elektrische Leistung und der gesamten empfangenen elektrischen Leistungsmenge, die aus der tatsächlichen empfangenen elektrischen Leistungsmenge und der prognostizierten elektrischen Leistungsmenge berechnet ist, auf das wenigstens eine oder die mehreren elektrischen Instrumente (310), die mit jedem Leistungsempfangspunkt verbunden sind, erhalten wird,

einen Zielwertkalkulator (204), der für jeden Leistungsempfangspunkt eine Differenz zwischen der prognostizierten empfangenen elektrischen Leistungsmenge für den Leistungsempfangspunkt und der Steuermenge für das wenigstens eine oder die mehreren elektrischen Instrumente (310), die mit dem Leistungsempfangspunkt verbunden sind, als einen Zielwert der elektrischen Leistungsmenge berechnet, die an dem Leistungsempfangspunkt von dem elektrischen Leistungssystem (100) empfangen wird, und

einen Instruktionswertbestimmer (205), der den Zielwert, der durch den Zielwertkalkulator (204) berechnet wurde, für jeden Leistungsempfangspunkt als einen Instruktionswert für das wenigstens eine oder die mehreren elektrischen Instrumente (310) bestimmt, die mit dem Leistungsempfangspunkt verbunden sind.

10. Steuervorrichtung (200) für empfangene elektrische Leistung nach Anspruch 9, wobei der Instruktionswertbestimmer (205)

die Steuermenge oder den Zielwert als den Instruktionswert auswählt,

die Steuermenge als den Instruktionswert bestimmt, wenn die Steuermenge als der Instruktionswert ausgewählt wird, und

den Zielwert als den Instruktionswert bestimmt, wenn der Zielwert als der Instruktionswert ausgewählt wird.

## Revendications

1. Procédé de commande de puissance électrique reçue comprenant:

acquérir (S103, S104) des quantités de puissance électrique reçues réelles qui sont des valeurs réelles des quantités de puissance électrique reçues sur des points de réception de puissance d'un système de puissance électrique (100) pendant une période écoulée d'une période prédéterminée, et des quantités de puissance électrique reçues prédites qui sont des valeurs prédites des quantités de puissance électrique à recevoir sur les points de réception de puissance du système de puissance électrique (100) dans une période restante de la période prédéterminée,

déterminer une quantité de puissance électrique totale reçue dans la période pré- . déterminée, sur la base des quantités de puissance électrique reçues réelles et des quantités de puissance électrique reçues prédites,

déterminer une quantité totale de commande qui est une différence entre une quantité cible de puissance électrique totale reçue et la quantité de puissance électrique totale reçue,

déterminer (S106) une quantité de commande pour chacun des points de réception de puissance sur la base de la quantité totale de commande,

déterminer (S107) une valeur cible pour chaque point de réception de puissance, la valeur cible étant une différence entre la quantité de puissance électrique reçue prédite pour le point de réception de puissance et la quantité de commande pour le point de réception de puissance,

déterminer (S108) une valeur d'instruction pour un ou plusieurs instruments électriques (310) connectés au point de réception de puissance, sur la base de la valeur cible.

2. Procédé de commande de puissance électrique reçue selon la revendication 1, dans lequel, dans l'étape de détermination (S108),

la quantité de commande ou la valeur cible est choisie comme la valeur d'instruction,

la quantité de commande est déterminée en tant que valeur d'instruction lorsque la quantité de commande est choisie comme la valeur d'instruction, et

la valeur cible est déterminée en tant que valeur d'instruction lorsque la valeur cible est choisie comme la valeur d'instruction.

3. Procédé de commande de puissance électrique reçue selon la revendication 2, dans lequel, dans l'étape de détermination (S108),

la quantité de commande est choisie comme la valeur d'instruction pour une première période comprenant un temps de début de la période prédéterminée, et

la valeur cible est choisie comme la valeur d'instruction pour une deuxième période comprenant un temps de fin de la période prédéterminée.

4. Procédé de commande de puissance électrique reçue selon la revendication 2, dans lequel, dans l'étape de détermination (S108),

la quantité de commande est choisie comme la valeur d'instruction pour ledit un ou lesdits plusieurs instruments électriques (310) connectés à un point de réception de puissance parmi ledit un ou lesdits plusieurs points de réception de puissance, sur lequel la quantité de puissance électrique reçue réelle ou la quantité de puissance électrique reçue prédite présente une variation supérieure à une valeur de seuil prédéterminée, et

la valeur cible est choisie comme la valeur d'instruction pour ledit un ou lesdits plusieurs instruments électriques (310) connectés à un point de réception de puissance parmi ledit un ou lesdits plusieurs points de réception de puissance, sur lequel la quantité de puissance électrique reçue réelle ou la quantité de puissance électrique reçue prédite présente une variation égale ou inférieure à la valeur de seuil prédéterminée.

5. Procédé de commande de puissance électrique reçue selon la revendication 2, dans lequel, dans l'étape de détermination (S108), dans un cas où un dispositif générateur d'énergie solaire est associé et connecté à un point de réception de puissance parmi ledit un ou lesdits plusieurs points de réception de puissance,

(i) la quantité de commande est choisie comme la valeur d'instruction pour ledit au moins un ou lesdits plusieurs instruments électriques (310) connectés audit un point de réception de puissance, lorsqu'une quantité de puissance électrique de sortie du dispositif générateur d'énergie solaire présente une variation supérieure à la valeur de seuil prédéterminée, et

(ii) la valeur cible est choisie comme la valeur d'instruction pour ledit un ou lesdits plusieurs instruments électriques (310) connectés audit un point de réception de puissance, lorsque la quantité de puissance électrique de sortie du dispositif générateur d'énergie solaire présente une variation égale ou inférieure à la valeur de seuil prédéterminée.

6. Procédé de commande de puissance électrique reçue selon la revendication 1, comprenant en outre la transmission (S109) de la valeur d'instruction à chacun dudit un ou desdits plusieurs instruments électriques (310).

7. Procédé de commande de puissance électrique reçue selon la revendication 6, dans lequel ledit un ou lesdits plusieurs instruments électriques (310) comprennent une ou plusieurs batteries, le procédé comprenant en outre:

acquérir (S101) une caractéristique de ladite au moins une ou desdites plusieurs batteries, dans lequel

la caractéristique représente au moins l'un parmi une capacité restante de la batterie, une capacité nominale de la batterie, un état de dégradation de la batterie et une capacité de sortie nominale de la batterie, et

dans l'étape de détermination (S107), la différence entre la quantité de puissance électrique totale reçue et une quantité cible prédéterminée de puissance électrique reçue est répartie conformément à la caractéristique.

8. Procédé de commande de puissance électrique reçue selon la revendication 1, dans lequel ledit au moins un ou lesdits plusieurs instruments électriques (310) comprennent au moins l'un parmi une batterie, une charge et un générateur.

9. Dispositif de commande de puissance électrique reçue (200) qui commande une quantité de puissance électrique manipulée par au moins un ou plusieurs instruments électriques (310) associés et connectés à chacun parmi un ou plusieurs points de réception de puissance qui reçoivent de la puissance électrique d'un système de puissance électrique (100) de manière à rapprocher une quantité totale de puissance électrique reçue d'une quantité cible prédéterminée de puissance électrique reçue, la quantité totale de puissance électrique reçue étant la somme de quantités de puissance électrique reçue sur les points de réception de puissance du système de puissance électrique (100) dans une période prédéterminée, le dispositif comprenant:

un acquéreur de quantités de puissance électrique reçues (202) qui acquiert une quantité de puissance électrique reçue réelle qui est une valeur réelle de la quantité de puissance électrique reçue sur chaque point de réception de puissance du système de puissance électrique (100) dans une période écoulée de la période prédéterminée, et une quantité de puissance électrique reçue prédite qui est une valeur prédite de la quantité de puissance électrique à recevoir sur chaque point de réception de puissance du système de puissance électrique (100) dans une période restante de la période prédéterminée;

un calculateur de quantité de commande (203) qui calcule une quantité de commande qui est la quantité de puissance électrique obtenue en distribuant, sur ledit au moins un ou lesdits plusieurs instruments électriques (310) connectés à chaque point de réception de puissance, une différence entre la quantité cible prédéterminée de puissance électrique reçue et la quantité totale de puissance électrique reçue calculée à partir de la quantité de puissance électrique reçue réelle et la quantité de puissance électrique reçue prédite,

un calculateur de valeur cible (204) qui calcule, pour chaque point de réception de puissance, une différence entre la quantité de puissance électrique reçue prédite pour le point de réception de puissance et la quantité de commande pour ledit au moins un ou lesdits plusieurs instruments électriques (310) connectés au point de réception de puissance, comme une valeur cible de la quantité de puissance électrique reçue sur le point de réception de puissance du système de puissance électrique (100), et

un dispositif de détermination de valeur d'instruction (205) qui détermine la valeur cible calculée par ledit calculateur de valeur cible (204) pour chaque point de réception de puissance, comme une valeur d'instruction pour ledit au moins un ou lesdits plusieurs instruments électriques (310) connectés au point de réception de puissance.

10. Dispositif de commande de puissance électrique reçue (200) selon la revendication 9, dans lequel le dispositif de détermination de valeur d'instruction (205)

sélectionne la quantité de commande ou la valeur cible comme la valeur d'instruction,

détermine la quantité de commande comme la valeur d'instruction lorsque la quantité de commande est choisie comme la valeur d'instruction, et

détermine la valeur cible comme la valeur d'instruction lorsque la valeur cible est choisie comme la valeur d'instruction.

# FIG. 1

# FIG. 2

200

## RECEIVED ELECTRICAL POWER CONTROL DEVICE

201

CHARACTERISTIC
ACQUIRER

203

CONTROL AMOUNT
CALCULATOR

202

RECEIVED ELECTRICAL
POWER AMOUNT
ACQUIRER

204

TARGET
VALUE
CALCULATOR

206

INSTRUCTION VALUE
NOTIFIER

205

INSTRUCTION VALUE
DETERMINER

# FIG. 3

310

## ELECTRICAL INSTRUMENT

314

311

### CONTROLLER

### CHARACTERISTIC NOTIFIER

312

### RECEIVED ELECTRICAL POWER AMOUNT ACQUIRER

313

### INSTRUCTION VALUE ACQUIRER

# FIG. 4

```
                        ┌──────────┐
                        │  START   │
                        └────┬─────┘
                             │
═════════════════════════════╪═══════════════════════════════════
         │                                              │
         ▼                                              ▼
┌──────────────────┐                    ┌──────────────────────────┐
│     ACQUIRE      │──S101              │ ACQUIRE ACTUAL RECEIVED  │──S103
│  CHARACTERISTIC  │                    │ ELECTRICAL POWER AMOUNT  │
└────────┬─────────┘                    └────────────┬─────────────┘
         │                                           │
         ▼                                           ▼
    ╱────────────╲                       ┌──────────────────────────┐
   ╱     IS       ╲──S102                │ ACQUIRE PREDICTED RECEIVED│──S104
  ╱  ACQUISITION   ╲     NO              │  ELECTRICAL POWER AMOUNT  │
 ╱ COMPLETED FOR    ╲────────            └────────────┬─────────────┘
 ╲ ALL ELECTRICAL   ╱                                 │
  ╲ INSTRUMENTS?   ╱                                  ▼
   ╲             ╱                           ╱──────────────╲
    ╲──────────╱                            ╱      IS        ╲──S105
         │ YES                             ╱   ACQUISITION     ╲   NO
         │                                ╲ COMPLETED FOR ALL  ╱────────
         │                                 ╲ POWER RECEIVING  ╱
         │                                  ╲   POINTS?      ╱
         │                                   ╲────────────╱
         │                                        │ YES
         │                                        │
═════════╪════════════════════════════════════════╪═══════════════
                             │
                             ▼
                 ┌────────────────────────┐
                 │ CALCULATE CONTROL AMOUNT│──S106
                 └───────────┬────────────┘
                             ▼
                 ┌────────────────────────┐
                 │  CALCULATE TARGET AMOUNT│──S107
                 └───────────┬────────────┘
                             ▼
                 ┌────────────────────────┐
                 │DETERMINE INSTRUCTION VALUE│──S108
                 └───────────┬────────────┘
                             ▼
                 ┌────────────────────────┐
                 │    GIVE NOTIFICATION OF │──S109
                 │    INSTRUCTION VALUE    │
                 └───────────┬────────────┘
                             ▼
                        ┌──────────┐
                        │   END    │
                        └──────────┘
```

# FIG. 5

```
        ┌─────────────┐
        │    START    │
        └─────────────┘
               │
               ▼
   ┌──────────────────────────┐
   │   GIVE NOTIFICATION OF   │─ S201
   │      CHARACTERISTIC      │
   └──────────────────────────┘
               │
               ▼
   ┌──────────────────────────┐
   │ GIVE NOTIFICATION OF     │─ S202
   │ RECEIVED ELECTRICAL      │
   │ POWER AMOUNT             │
   └──────────────────────────┘
               │
               ▼
   ┌──────────────────────────┐
   │ ACQUIRE INSTRUCTION VALUE│─ S203
   └──────────────────────────┘
               │
               ▼
         ╱─────────────╲  S204
        ╱ IS INSTRUCTION ╲      NO
        ╲ VALUE TARGET    ╱────────────┐
         ╲  VALUE?       ╱             │
          ╲─────────────╱              │
               │ YES                   │
               ▼ S205                  ▼ S206
   ┌──────────────────────┐  ┌──────────────────────┐
   │  CONTROL HANDLED     │  │  CONTROL HANDLED     │
   │ ELECTRICAL POWER     │  │ ELECTRICAL POWER     │
   │ AMOUNT SO AS TO      │  │ AMOUNT SO AS TO      │
   │ BRING RECEIVED       │  │ BRING HANDLED        │
   │ ELECTRICAL POWER     │  │ ELECTRICAL POWER     │
   │ AMOUNT CLOSER TO     │  │ AMOUNT CLOSER TO     │
   │ TARGET VALUE         │  │ CONTROL AMOUNT       │
   └──────────────────────┘  └──────────────────────┘
               │                       │
               ▼◄──────────────────────┘
        ┌─────────────┐
        │     END     │
        └─────────────┘
```

# FIG. 6

RECEIVED ELECTRICAL POWER CONTROL DEVICE

CONTROL AMOUNT CALCULATION

INSTRUCTION CYCLE

INSTRUCTION VALUE (CONTROL AMOUNT)

TIME

ELECTRICAL INSTRUMENT

ADJUSTMENT

ADJUSTMENT CYCLE

TIME

EP 3 116 081 B1

# FIG. 7

# FIG. 8

EP 3 116 081 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012249374 A
- JP 20115035883 A
- EP 2874263 A1
- WO 2015029448 A1
- US 20100204845 A1
- WO 2015041367 A1
- US 20150160040 A1